# EUROPEAN PATENT SPECIFICATION

(11) **EP 1 804 530 B1**
(45) Date of publication and mention of the grant of the patent: **06.10.2010**
(21) Application number: 05805887.6
(22) Date of filing: 13.10.2005
(51) Int. Cl.: H04B 7/26

(54) **TRANSMITTING DATA IN A DIGITAL SYSTEM**
SENDEN VON DATEN IN EINEM DIGITALEN SYSTEM
TRANSMISSION DE DONNEES DANS UN SYSTEME DIGITAL

(30) Priority: 13.10.2004 CN 200410083980
(43) Date of publication of application: 04.07.2007
(73) Proprietor: Huawei Technologies Co., Ltd., Longgang District, Shenzhen Guangdong 518129 (CN)
(72) Inventor: LUO, Xiong, Huawei Administration Building, Shenzhen, Guangdong 518129 (CN)
(74) Representative: Reinhard - Skuhra - Weise & Partner GbR
(86) International application number: PCT/CN2005/001683
(87) International publication number: WO 2006/039867

(56) References cited:
- WO-A-00/74344
- WO-A-2005/006599
- CN-A- 1 418 021
- CN-A- 1 494 331
- US-A1- 2002 064 145
- US-A1- 2004 017 823
- US-B1- 6 614 775
- US-B1- 6 741 618
- 3GPP2 - 3RD GENERATION PARTNERSHIP PROJECT 2: "Medium Access Control (MAC) Standard for cdma2000 Spread Spectrum Systems - Release D; C.S0003-D; Version 1.0"[Online] 13 February 2004 (2004-02-13), pages 1-254, XP002462195 http://www.3gpp2.org/Public_html/specs/ Retrieved from the Internet: URL:http://www.3gpp2.org/Public_html/specs /C.S0003-D_v1.0__MAC_031504.pdf> [retrieved on 2007-12-12]

## Description

### Field of the Invention

The present invention relates to digital trunking technology, and particularly, to a method, a system and a mobile station for data transmission in a digital trunking system.

### Background of the invention

In current application of digital trunking services in Code Division Multiple Address (CDMA), CDMA 2000 or CDMA 1X systems, shared forward traffic channels are usually adopted to save base station powers, e.g., a base station transmits traffics over a shared forward traffic channel and certain of mobile stations listen to the shared forward traffic channel simultaneously to obtain the traffics. In such a case control plane data and user plane data need to be transmitted through different channels over a forward link while through a same channel over a reverse link. Therefore, when a trunking group call is set up, a first forward/reverse channel and a second forward channel are established for each Mobile Station (MS) which joins the trunking group call. The first forward channel is used for transmitting the control plane data over the forward link, the first reverse channel is used for transmitting the control plane and the user plane data over the reverse link, and the second forward channel is used for transmitting the user plane data over the forward link. The control plane data may include signaling, and the user plane data in a digital trunking system may include the voice service data and data service data.

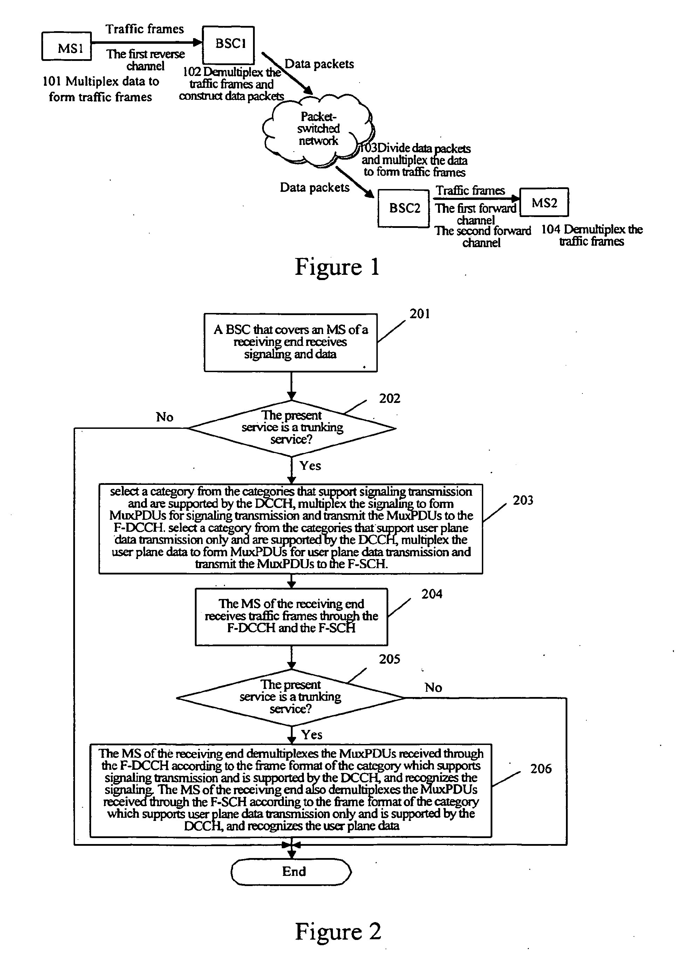

Figure 1 shows a general schematic of data transmission in a digital trunking system, in which the data include voice service data, the data service data and signaling. As shown in Figure 1, when MS1 sends data to MS2, the data transmission may include the following :
Step 101: The multiplex (Mux) sub-layer in the Media Access Control (MAC) layer of MS 1 receives and multiplexes the data from the upper layer to obtain multiplex sublayer protocol data units (MuxPDUs), transmits the MuxPDUs to the physical layer (PHY) of MS 1 through a first reverse channel, and transmits the MuxPDUs to the PHY layer of Base Station Controller 1 (BSC1) which controls MS1. Since the transmission process concerned by the present invention relates to the process in the Mux sub-layer, operations performed by the upper layer and the PHY layer are not described in detail herein.
Step 102: The PHY layer of BSC1 transmits the MuxPDUs to the Mux sub-layer in the MAC layer of BSC1 through a first reverse channel, demultiplexes the MuxPDUs according to a channel rate of the first reverse channel and frame formats of the MuxPDUs to obtain payload from the MuxPDUs, and transmits the payload to the upper layer. The upper layer combines signaling, the voice service data and the data service data respectively, to form data packets and transmits these data packets through a packet-switched network to BSC2 which serves MS2. The signaling transmitted through the packet-switched network is end-to-end signaling, and a part of the signaling received by BSC1 is further transmitted to a core network by the upper layer of BSC 1.
Step 103: The upper layer of BSC2 receives the data packets from the packet-switched network and retrieves the payload, i.e., the signaling, the voice service data and the data service data. The Mux sub-layer in the MAC layer of BSC2 multiplexes the signaling and the user plane data, respectively, to form MuxPDUs, transmits the MuxPDUs containing the signaling through the first forward channel and transmits the MuxPDUs containing the user plane data through the second forward channel, so that the data are sent to the PHY layer of the BS2 and eventually to the PHY layer of MS2.
Step 104: The PHY layer of MS2 transmits the MuxPDUs containing the signaling and those containing the user plane data through the first forward channel and the second forward channel respectively to the Mux sub-layer in the MAC layer of MS2. The Mux sub-layer of MS2 demultiplexes the MuxPDUs containing the signaling according to the channel rate of the first forward channel and the frame formats of the MuxPDUs, demultiplexes the MuxPDUs containing the user plane data according to the channel rate of the second forward channel and the frame formats of the MuxPDUs, retrieves the payloads, e.g., signaling, the voice service data and data service data, from the MuxPDUs and transmits the data retrieved to the upper layer of MS2.

In the process of the multiplexing, the Mux sub-layer selects categories according to the categories supported by the channels through which the data are transmitted and other factors including the data length to multiplex the payload to form the MuxPDUs. In a process of demultiplexing, the Mux sub-layer also recognizes the payload of the MuxPDUs according to the categories supported by the channels through which the data are transmitted. A type of channel may support one or more MuxPDU types. When the Mux sub-layer of an MS or that of a BSC finds the category of the MuxPDU received at present as a category unsupported by the present channel, the MS or BSC thinks the MuxPDUs as illegal frames and does not receive the MuxPDUs. When the Mux sub-layer of the MS or the BSC is unable to select an appropriate category to multiplex upper layer data based on the type of the channel through which data are to be sent at present, the MS or BSC identifies the data received at present as invalid and does not process the data. It can be concluded that MuxPDU types supported by different channels shall be taken into consideration when different types of channel are adopted to transmit data in both the forward direction and the reverse direction, so that appropriate categories can be selected for multiplexing MuxPDUs to ensure successful transmission in both directions.

International Patent Application WO0074344 describes a method for transmitting variable-length data in a mobile communication system according to a radio link protocol in a mobile communication system. It includes MuxPDU format tables for information bits of FCH and SCH for rate sets 1 and 2.

3^{rd} Generation Partnership Project 2 (3GPP2), Medium Access Control (MAC) Standard for cdma2000 Spread Spectrum Systems, 3GPP2 C.S0003-D, version 1.0, February 13, 2004, describes in section 2.2.1.1 Mux and QoS sublayer for CDMA 2000 comprising multiplex options for FCH, DCCH and SCH Rate Set 1 and Rate Set 2. Further supported MuxPDU types are disclosed for various physical channels. Section 2.2.1.1.1.4 discusses Multiplex Sublayer Receiving functions and section 2.2.1.1.1.5 discusses MuxPDU types processed by the multiplex sublayer.

In a digital trunking system of the prior art, a Dedicated Control CHannel (DCCH) is adopted as a first forward/reverse channel and a Supplementary CHannel (SCH) is adopted as a second forward channel. Specifically, a Forward Dedicated Control CHannel (F-DCCH) is used for transmitting forward signaling, a Reverse Dedicated Control CHannel (R-DCCH) is used for transmitting reverse signaling and reverse user plane data, and a Forward Supplementary CHannel (F-SCH) is used for transmitting forward user plane data.

DCCH supports MuxPDU Types 1, 2, 4 and 6, and SCH supports MuxPDU Types 1, 2, 3 and 5. When the digital trunking system adopts enhanced variable rate codecs, EVRC, format for voice coding and decoding, a channel whose rate belongs to Rate Set 1, RS1, is required for transmitting 20ms voice frames, therefore MuxPDU Type 1 is selected for the F/R-DCCH according to the MuxPDU Types supported by DCCH, and MuxPDU Type 1 shall also be selected for F-SCH so that the matched types of the MuxPDUs are transmitted through F-SCH and R-DCCH. When the digital trunking system adopts QCELP13K (Qualcomm Code Exited Linear Predictive Coding 13 k) format for voice coding and decoding, a channel whose rate belongs to Rate Set 2, RS2, is required for transmitting 20ms voice frames, therefore MuxPDU Type 2 is selected for the F/R-DCCH according to the MuxPDU Types supported by DCCH, and MuxPDU Type 2 shall also be selected for F-SCH so that the matched types of the MuxPDUs are transmitted through F-SCH and R-DCCH.

A solution for transmitting data on a DCCH and a Fundamental Channel (FCH) using a MuxPDU Type and categories of the MuxPDU Type, according to the frame formats of MuxPDU Types 1 and 2 defined in MAC layer protocol, may include the following processes.

Table 1 shows MuxPDU Type 1 formats. As shown in Table 1, MuxPDU Type 1 provides 12 categories, each of which is defined with fields of Transmit Rate, MuxPDU Header, Primary Traffic, Signaling Traffic, Secondary Traffic, and channel types permitted on. The MuxPDU Header includes fields of Mixed Mode (MM), Traffic Type (TT) and Traffic Mode (TM), each of which is given a Bit-based value. For example, the MuxPDU header of category 2 shall be a 4 Bits value "1000", in which the value of MM is "1", that of TT is "0" and that of TM is "00". Different categories with the same transmission rate can be recognized through their MuxPDU headers. The values of fields of Primary Traffic, Signaling Traffic and Secondary Traffic define the size of one traffic block in Bits, e.g., for category 3, the size of the primary traffic of is 40 Bits/block, the size of the signaling traffic is 128 Bits/block and that of the secondary traffic is 0 Bits/block. And whether one channel type on which the category is permitted or not is represented by "Y" or "N", wherein "Y" indicates that the category is permitted on this channel type while "N" indicates that the category is not permitted on this channel type. For example, it can be concluded from the field "Permitted On" for category 7 that category 7 is permitted on FCH and DCCH but not permitted on SCH. The field with value "-" in the MuxPDU header indicates void which does not occupy any Bits, e.g., the MuxPDU header for category 1 is "0" and occupies only 1 Bit. With regard to the MuxPDU applied to the digital trunking system, the field of primary traffic is usually filled with the voice service data and that of secondary traffic is filled with data service data. However, when there is only the data service data being transmitted, the field of primary traffic can be filled with the data service data alternatively.

**- Table 1**

| Category | Transmit Rate (Bits/second) | MuxPDU Header | | | Primary Traffic (Bits/block) | Signaling Traffic (Bits/block) | Secondary Traffic (Bits/block) | Permitted on | | |
|---|---|---|---|---|---|---|---|---|---|---|
| | | Mixed Mode (MM) | Traffic Type (TT) | Traffic Mode (TM) | | | | FCH | DCCH | SCH |
| 1 | 9,600 | '0' | - | - | 171 | 0 | 0 | Y | Y | Y |
| 2 | | '1' | '0' | '00' | 80 | 88 | 0 | Y | Y | N |
| 3 | | '1' | '0' | '01' | 40 | 128 | 0 | Y | Y | N |
| 4 | | '1' | '0' | '10' | 16 | 152 | 0 | Y | Y | N |
| 5 | | '1' | '0' | '11' | 0 | 168 | 0 | Y | Y | N |
| 6 | | '1' | '1' | '00' | 80 | 0 | 88 | Y | Y | N |
| 7 | | '1' | '1' | '01' | 40 | 0 | 128 | Y | Y | N |
| 8 | | '1' | '1' | '10' | 16 | 0 | 152 | Y | Y | N |
| 9 | | '1' | '1' | '11' | 0 | 0 | 168 | Y | Y | Y |
| 10 | 4,800 | - | - | - | 80 | 0 | 0 | Y | N | N |
| 11 | 2,400/2,700 | - | - | - | 40 | 0 | 0 | Y | N | N |
| 12 | 1,200/1,500 | - | - | - | 16 | 0 | 0 | Y | N | N |

In view of table 1, FCH supports all categories provided by MuxPDU Type 1, i.e., categories 1 to 12; DCCH supports categories 1 to 9 provided by MuxPDU Type 1 and SCH supports categories 1 and 9, but not the other categories of table 1, provided by MuxPDU Type 1. Therefore the categories supported by the channels shall be taken into consideration when MuxPDU Type 1 is adopted for the data transmission. Since DCCH and SCH are adopted for the data transmission in systems of the prior art, the categories and the data transmission supported by DCCH and SCH shall be taken into consideration herein, i.e., the support of categories 1 to 9 provided by DCCH and SCH and the support of the data transmission provided by categories 1 to 9 shall be taken into consideration.

As shown in Table 1, category 1 supports the primary traffic, i.e., either of the voice service data or the data service data; category 9 supports the secondary traffic, i.e., the data service data; category 5 supports the signaling traffic, i.e., signaling but no service data; categories 2 to 4 support the primary traffic and the signaling traffic, i.e., the multiplexing of the voice service data and signaling or the multiplexing of the data service data and signaling; and categories 6 to 8 support the multiplexing of the voice service data and data service data, or data service data. As SCH is adopted in the forward direction to transmit the user plane data, DCCH is adopted in the forward direction to transmit the signaling and in the reverse direction to transmit the user plane data and/or the signaling, F-SCH is restricted for selection among the categories that support the user plane data transmission from all categories supported by F-SCH. For example, category 1 is selected to transmit the voice service data or the data service data, and category 9 is selected to transmit the data service data. Consequently, R-DCCH also selects category 1 to transmit the voice service data or the data service data and selects category 9 to transmit the data service data so that the user plane data received through R-DCCH can be successfully multiplexed to form the MuxPDUs which then can be transmitted through F-SCH. Therefore in such a case, the multiplexing of the signaling and the user plane data is impossible since R-DCCH can select either category 1 or 9 to transmit the user plane data. Therefore, R-DCCH is limited for selection of category 5, which supports the signaling transmission frame, to multiplex the signaling for the signaling transmission and to transmit signals, and the category 5 shall be selected for F-DCCH for multiplexing of the MuxPDUs containing the signaling which shall be transmitted to the MS.

The field of primary traffic for category 1 of MuxPDU Type 1 values 171 bits/block, and the 171 bits/block corresponds to the full rate voice data frame of RS1. It can be concluded that the solution adopted in the prior art supports full rate voice data frame only, and does not support variable rate voice data frames including 1/2 rate, 1/4 rate or 1/8 rate voice data frames, which correspond to primary traffics of 80 bits/block, 40 bits/block and 16 bits/block respectively. Accordingly, the multiplexing of the voice service data and the data service data is impossible in the data transmission on DCCH and SCH, and different MuxPDU frames should be formed for the voice service data and for the data service data respectively, which leads to discontinuous data frames, easily dithered voice and low communication quality in the trunking service where the voice service and the data service may be initiated simultaneously. Furthermore, the multiplexing of the voice service data and signaling is impossible in the data transmission on the reverse link, which means the data transmission capability of the channel is not fully utilized.

A similar problem happens when MuxPDU Type 2 is adopted for the data transmission. Table 2 shows MuxPDU Type 2 formats. As shown in Table 2, the frame formats of MuxPDU Type 2 are described in a similar way as those of MuxPDU Type 1. However, there are some differences: MuxPDU Type 2 is divided into 25 categories and MuxPDU headers include fields of MM and Frame Mode (FM), some of these categories have different transmission rates, and the primary traffics, signaling traffics and secondary traffics for different categories occupy different bits per block.

**Table 2**

| Transmit Rate (Bits/second) | Category | MuxPDU Header | | Primary Traffic (Bits/block) | Signaling Traffic (Bits/block) | Secondary Traffic (Bits/block) | Permitted on | | |
|---|---|---|---|---|---|---|---|---|---|
| | | Mixed Mode (MM) | Frame Mode (FM) | | | | FCH | DCCH | SCH |
| 14, 400 | 1 | '0' | - | 266 | 0 | 0 | Y | Y | Y |
| | 2 | '1' | '0000' | 124 | 138 | 0 | Y | Y | N |
| | 3 | '1' | '0001' | 54 | 208 | 0 | Y | Y | N |
| | 4 | '1' | '0010' | 20 | 242 | 0 | Y | Y | N |
| | 5 | '1' | '0011' | 0 | 262 | 0 | Y | Y | N |
| | 6 | '1' | '0100' | 124 | 0 | 138 | Y | Y | N |
| | 7 | '1' | '0101' | 54 | 0 | 208 | Y | Y | N |
| | 8 | '1' | '0110' | 20 | 0 | 242 | Y | Y | N |
| | 9 | '1' | '0111' | 0 | 0 | 262 | Y | Y | Y |
| | 10 | '1' | '1000' | 20 | 222 | 20 | Y | Y | N |
| 7,200 | 11 | '0' | - | 124 | 0 | 0 | Y | N | N |
| | 12 | '1' | '000' | 54 | 67 | 0 | Y | N | N |
| | 13 | '1' | '001' | 20 | 101 | 0 | Y | N | N |
| | 14 | '1' | '010' | 0 | 121 | 0 | Y | N | N |
| | 15 | '1' | '011' | 54 | 0 | 67 | Y | N | N |
| | 16 | '1' | '100' | 20 | 0 | 101 | Y | N | N |
| | 17 | '1' | '101' | 0 | 0 | 121 | Y | N | N |
| | 18 | '1' | '110' | 20 | 81 | 20 | Y | N | N |
| 3,600 | 19 | '0' | - | 54 | 0 | 0 | Y | N | N |
| | 20 | '1' | '00' | 20 | 32 | 0 | Y | N | N |
| | 21 | '1' | '01' | 0 | 52 | 0 | Y | N | N |
| | 22 | '1' | '10' | 20 | 0 | 32 | Y | N | N |
| | 23 | '1' | '11' | 0 | 0 | 52 | Y | N | N |
| 1,800 | 24 | '0' | - | 20 | 0 | 0 | Y | N | N |
| | 25 | '1' | - | 0 | 0 | 20 | Y | N | N |

It can be seen form Table 2 that FCH supports frame formats of categories 1 to 25, DCCH supports frame formats of categories 1 to 9 and SCH supports frame formats of categories 1 and 9, but no other categories of table 2. Herein, the categories and the data transmission supported by DCCH and SCH shall be taken into consideration, i.e., only the support of categories 1 to 9 provided by DCCH and SCH and the support of the data transmission provided by categories 1 to 9 shall be taken into consideration.

As shown in Table 2, category 1 supports the primary traffic, i.e., the voice service data or the data service data only; category 9 supports the secondary traffic, i.e., the data service data only; category 5 supports the signaling traffic, i.e., the signaling but no service data; categories 2 to 4 support the primary traffic and the signaling traffic, i.e., the multiplexing of the voice service data and the signaling, or the multiplexing of the data service data and the signaling; categories 6 to 8 support the multiplexing of the voice service data and the data service data, or the data service data. Therefore the same problem happens with MuxPDU Type 2 as with MuxPDU Type 1: F-SCH can only select category 1 to transmit the voice service data or the data service data or select category 9 to transmit the data service data, consequently. R-DCCH also has to select category 1 to transmit the voice service data or the data service data and select category 9 to transmit the data service data. And category 5, which support the signaling transmission signaling transmission but no other traffic transmission, shall be the only choice for R-DCCH and F-DCCH for the signaling transmission.

The field of primary traffic for category 1 of MuxPDU Type 2 values 266 bits/block, and the 266 bits/block corresponds to the full rate voice data frame of RS2. Thus MuxPDU Type2 in the prior art also supports full rate voice data frames only, and does not support variable rate voice data frames including 1/2 rate, 1/4 rate or 1/8 rate voice data frames, which correspond to primary traffics of 124 bits/block, 54 bits/block and 20 bits/block respectively. Hence the multiplexing of the voice service data and the data service data or of the voice service data and the signaling is impossible for the data transmission on DCCH and SCH. Thus MuxPDU Type 2 has the same problem with MuxPDU Type 1.

It can be seen from the multiplexing and demultiplexing in the Mux sub-layer in the prior art that the categories are limited for the user plane data transmission on the second forward channel i.e. F-SCH, the categories for the user plane data transmission and the signaling transmission on the first reverse channel i.e. R-DCCH, are limited accordingly, and the categories for the signaling transmission on the first forward channel i.e. F-DCCH, are also limited.

In view of the above, in the digital trunking system of the prior art, whether MuxPDU Type 1 or MuxPDU Type 2 is adopted for the data transmission, the system cannot support the variable rate voice frame transmission, but the full rate, i.e., RS1 or RS2, voice frame transmission, thus the system does not support the multiplexing of the voice service data and the data service data and the multiplexing of signaling and voice service data. In a trunking service where simultaneously, both the signaling and the voice service data are transmitted, or both the data service and the voice service are transmitted, either the voice service data and the signaling, or the voice service data and the data service data have to be framed into different MuxPDUs, respectively, i.e., one MuxPDU can only contain one of the voice service data, the data service data and the signaling, which leads to discontinuous data frames and further to easily dithered voice and low communication quality and thus limits the transmission capability of the channels.

### Summary of the invention

The present invention provide a method, a system and a mobile station for data transmission in a digital trunking system according to respective independent claims 1, 18 and 35, so that variable rate voice frame transmission is supported in trunking services and the multiplexing of the voice service data and the data service data is possible in the transmission, which will reduce voice dither and improve communication quality. In the present invention, variable channel transmit rates are supported in trunking services to save channel transmission power. Furthermore, by using the method and the system provided by respective claims 1 and 18, full rate and variable rate voice frame transmissions are supported so that multiplexing of the voice service data and the data service data is possible in the transmission, which will ensure service quality.

The method for data transmission of user plane data in a digital trunking system, in which signaling and user plane data in a reverse direction is transmitted on a reverse channel, signaling in forward direction is transmitted on a forward channel for transmitting signaling, and user plane data in forward direction is transmitted on a forward channel for transmitting user plane data, of claim 1 includes:
receiving, by a Base Station Controller, BSC, signaling and/or user plane data;
selecting, by the BSC, a category for signaling from a plurality of categories which support signaling transmission and are supported by the forward channel for transmitting signaling;
multiplexing, by the BSC, the signaling to form traffic frames according to the category for signaling and transmitting the traffic frames containing the signaling through the forward channel for transmitting signaling to a mobile station of a receiving end;
selecting, by the BSC, a category for user plane data from a plurality of categories which support user plane data and are supported by the forward channel for transmitting signaling, and
multiplexing, by the BSC, user plane data to form traffic frames according to the category for user plane data and transmitting the traffic frames containing user plane data through the forward channel for transmitting user plane data to a mobile station of a receiving end.

The system of claim 18 includes a base station controller, BSC, for data transmission of user plane data in a digital trunking system, in which signaling and user plane data in a reverse direction is transmitted on a reverse channel, signaling in forward direction is transmitted on a forward channel for transmitting signaling, and user plane data in forward direction is transmitted on a forward channel for transmitting user plane data,
wherein the BSC includes processing means configured for
selecting a category for signaling from a plurality of categories, which support signaling transmission and are supported by the forward channel for transmitting signaling;
multiplexing the signaling to form traffic frames according to the category for signaling and transmitting the traffic frames containing the signaling through the forward channel for transmitting signaling to a mobile station of a receiving end;
selecting a category for user plane data from a plurality categories which support user plane data and are supported by the forward channel for transmitting signaling, and
multiplexing user plane data to form traffic frames according to the category for user plane data and transmitting the traffic frames containing user plane data through the forward channel for transmitting user plane data to a mobile station of a receiving end.

The Mobile Station of a receiving end of claim 35 is adapted to:
receive from a BSC signaling in forward direction on a forward channel for transmitting signaling multiplexed by the BSC to form traffic frames according to the category for signaling selected by the BSC from a plurality of categories which support signaling transmission and are supported by the forward channel for transmitting signaling and,receive from the BSC user plane data in forward direction on a forward channel for transmitting user plane data multiplexed by the BSC to form traffic frames according to the category for user plane data selected by the BSC from a plurality of categories which support user plane data and are supported by the forward channel for transmitting signaling, and
demultiplex the traffic frames containing the signaling based on the category for signaling from a plurality of categories which support signaling transmission and are supported by the forward channel for transmitting signaling, and recognize the signaling;
demultiplex the traffic frames containing the user plane data based on the category for user plane data from categories which support user plane data and are supported by the forward channel for transmitting signaling, and recognize the user plane data.

As above, in the first solution provided by the embodiment of the present invention, on the reverse link, the processes of multiplexing and demultiplexing MuxPDU frames on DCCH / FCH are similar to the processes in the prior art, while on the forward link, when the present service is identified as a trunking service, the categories supported in the processes of multiplexing and demultiplexing on DCCH/FCH and on SCH are modified respectively so that traffic frames that support multiplexing of the voice service data and the data service data may be supported on the forward SCH. In the second solution provided by the embodiment of the present invention, the categories supported in the processes of multiplexing and demultiplexing on the reverse DCCH, the forward DCCH or the FCH, and SCH are modified respectively, so that not only traffic frames that support multiplexing of the voice service data and the data service data are supported on the forward SCH, but also traffic frames of channels with variable transmission rates are supported on DCCH and SCH.

The data transmission provided by the present invention for a digital trunking system enable trunking services to support multiplex transmission of the voice service data and the data service data, which will reduce voice dither and ensure voice quality. The present invention enables DCCH in trunking services to support more categories for the data transmission so that the channel transmission capability can be fully utilized and traffic frames of channels with variable transmission rates can be supported on DCCH and SCH, and as a result, traffic frames of comparatively low transmission rate can be transmitted and channel transmission power is thus saved.

### Brief Description of the Drawings

Figure 1 is a conventional schematic of data transmission in a digital trunking system;
Figure 2 is a flow chart of a first solution provided by an embodiment of the present invention;
Figure 3 is a flow chart of another solution provided by another embodiment of the present invention.

### Detailed Description of the Invention

Further description of the present invention is given hereinafter with reference to accompanying drawings and embodiments.

In CDMA, CDMA 2000 or CDMA 1x system of the prior art, while transmitting data by an MS of a transmitting end to an MS of a receiving end, the MS of the transmitting end multiplexes data blocks into MuxPDUs. A BSC which covers the MS of the transmitting end demultiplexes the MuxPDUs to obtain the data and transmits the data to a BSC which covers the MS of the receiving end. The BSC which covers the MS of the receiving end receives the data, multiplexes the data into MuxPDUs and transmits the MuxPDUs to the MS of the receiving end. The MS of the receiving end demultiplexes the MuxPDUs to obtain the data payload.

In the first data transmission solution provided by an embodiment of the present invention for digital trunking services, a first reverse channel is adopted for signaling and the user plane data transmission, a first forward channel for the signaling transmission and a second forward channel for the user plane data transmission. In this embodiment, the processes of multiplexing frames by the MS of the transmitting end and demultiplexing frames by the BSC that covers the MS of the transmitting end remains the same as that in the prior art, while the processes of multiplexing frames by the MS of the receiving end and demultiplexing frames by the BSC that covers the MS of the receiving end are modified. Specifically, the BSC that covers the MS of the receiving end receives signaling and/or user plane data, selects a first category from the categories which support the signaling transmission and are supported by the first channels, multiplexes the signaling to traffic frames using the first category and transmits the traffic frames containing the signaling to the first forward channel. The BSC that covers the MS of the receiving end also selects a second category from the categories which support the user plane data transmission and are supported by the first channels, multiplexes the user plane data to traffic frames using the second selected category and transmits the traffic frames containing the user plane data to the second forward channel. The MS of the receiving end receives the traffic frames containing the signaling through the first forward channel, demultiplexes the traffic frames based on the frame format of the category that supports the signaling transmission and is supported by the first channels, and recognizes the signaling. The MS of the receiving end also receives the traffic frames containing the user plane data through the second forward channel, demultiplexes the frames based on the frame format of the category that supports the user plane data transmission and is supported by the first channels, and recognizes the user plane data.

In this embodiment, the first channel may be a DCCH or an FCH; the second channel may be an SCH. The traffic frames comprise MuxPDUs. The processes of demultiplexing and multiplexing traffic frames are performed in the Mux sub-layers in MAC layers of the MS and in the Mux sub-layers in MAC layers of the BSC respectively. Both DCCH and FCH support the MuxPDU Types of 1, 2, 4 and 6. In this embodiment, MuxPDU Type 1 or 2 is adopted for the data transmission according to the voice coding and decoding format adopted by the service. The embodiment is further explained with reference to Figure 2 and herein, a DCCH is adopted as the first channel, an SCH is adopted as the second channel and MuxPDU Type 1 is adopted for the data transmission. As shown in Figure 2, the embodiment includes these processes:
Step 201: The upper layer of a BSC, which covers an MS of a receiving end, receives data packets through a packet-switched network and extracts payload i.e., signaling, voice service data and/or data service data of the data packets.
Step 202: Before multiplexes the signaling and/or user plane data to form traffic frames respectively, the Mux sub-layer in the MAC layer of the BSC which covers the MS of the receiving end determines whether the present service is a trunking service. If the present service is a trunking service, perform Step 203; otherwise, terminate the process.

In this step, the BSC or MS accesses the Service Option (SO) saved in local during a call establishment to determine whether the present service is a trunking service. If the present service is not a trunking service, the system continues with the same process as that in the prior art;
Step 203: The Mux sub-layer of the BSC which covers the MS of the receiving end selects a category from the categories that support the signaling transmission and are supported by DCCH, multiplexes the signaling to form MuxPDUs for the signaling transmission and transmits the MuxPDUs to F-DCCH. The Mux sub-layer of the BSC which covers the MS of the receiving end also selects a category from the categories that support the user plane data transmission and are supported by DCCH, multiplexes the user plane data to form MuxPDUs for the user plane data transmission and transmits the MuxPDUs to F-SCH so that the MuxPDUs are transmitted to the PHY layer of the BSC which covers the MS of the receiving end, and eventually transmitted to the PHY layer of the MS of the receiving end.

It can be seen from the frame formats shown in Table 1 that the categories of MuxPDU Type 1 which support the signaling transmission and are supported by DCCH include categories 2 to 5, and the categories which support the user plane data transmission and are supported by DCCH include category 1 and categories 6 to 9. Therefore the Mux sub-layer selects a category from categories 2 to 5, based on the factors including data length of the signaling, to construct frames for the signaling transmission, and selects another category from category 1 and categories 6 to 9, based on the factors including length of the voice service or data service data, to construct frames for the user plane data transmission. For example, when the signaling received is 88 bits long, category 2 is selected to multiplex the signaling. A skilled person in the art should understand the selection of a category from a certain group of categories based on factors including data length for multiplexing frames, thus the selection will not be described herein anymore.

In addition, categories 2 to 4 support the multiplexing of the signaling and primary traffic. However, in the trunking service, forward signaling is transmitted alone. Thus in this embodiment, when selecting a category from types 2 to 5 for the signaling transmission, for example when select a category from the categories, i.e. types 2 to 4, which support the multiplexing of signaling and user plane data for the signaling transmission, the primary traffic field which should be filled with user plane data shall be filled with invalid data, e.g., random numbers.
Step 204: The PHY layer of the MS of the receiving end transmits the MuxPDUs containing the signaling through F-DCCH and transmits the MuxPDUs containing the user plane data through F-SCH, so that both kinds of MuxPDUs are transmitted to the Mux sub-layer in the MAC layer of the MS of the receiving end.
Step 205: Before demultiplexes the MuxPDUs, the Mux sub-layer of the MS of the receiving end determines whether the present service is a trunking service. If the present service is a trunking service, perform Step 206; otherwise, terminate the process.
Step 206: The Mux sub-layer of the MS of the receiving end demultiplexes the MuxPDUs received through F-DCCH according to the frame format of the category which supports the signaling transmission and is supported by DCCH, and recognizes the signaling. The Mux sub-layer of the MS of the receiving end also demultiplexes the MuxPDUs received through F-SCH according to the frame format of the category which supports the user plane data transmission and is supported by DCCH, and recognizes the user plane data. Then the Mux sub-layer of the MS of the receiving end transmits the data payload recognized, e.g., data service data, the voice service data and signaling, to the upper layer of the MS of the receiving end.

As the categories which support the signaling transmission and are supported by DCCH include categories 2 to 5, and the categories which support the user plane data transmission and are supported by DCCH include category 1 and categories 6 to 9, the Mux sub-layer demultiplexes the MuxPDUs containing the signaling according to the frame format of one category of categories 2 to 5 so that the signaling can be recognized, and demultiplexes the MuxPDUs containing the user plane data according to a frame format from category 1 and categories 6 to 9 so that the user plane data can be recognized. For example, when a MuxPDU with a transmission rate of 9,600 bits/second and a header of "1100" is received, the Mux sub-layer can determine that the traffic frame is MuxPDU Type 6 which shall be demultiplexed according to the format defined for MuxPDU Type 6 in which the field of the primary traffic occupies 80 bits for and the field of the secondary traffic occupies 88 bits, so that the user plane data in the MuxPDU can be recognized. A skilled person in the art should understand the selection of a category from a certain group of categories based on factors including data length for multiplexing frames, thus the selection, will not be described herein anymore.

In addition, categories 2 to 4 support the multiplexing of the signaling and the primary traffic. However, in the trunking service, forward signaling is transmitted alone. Thus in this embodiment, when select a category from categories 2 to 5 for the signaling transmission, e.g. when the category of the present MuxPDU is one of categories 2 to 4, the signaling of the signaling traffic shall be recognized and the data in the primary traffic field, which should be filled with user plane data, shall be ignored, i.e., not be accessed or processed.

In the solution provided by the above embodiment of the present invention for digital trunking services in the present mobile communication network, on the reverse link, the processes of multiplexing and demultiplexing frames by Mux sub-layers of the MS of the transmitting end and the BSC which covers the MS of the transmitting end remain the same as that in the prior art, so that traffic frames containing the voice service data and the data service data or containing the user plane data and signaling can be transmitted on R-DCCH. On the forward link, when the Mux sub-layer of the MS of the receiving end demultiplexes the traffic frames or when the Mux sub-layer of the BSC which covers the MS of the receiving end multiplexes the data to form the traffic frames, the Mux sub-layers determine whether the present service is a trunking service by accessing a local SO. If the present service is a trunking service, the processes of multiplexing and demultiplexing are modified, so that traffic frames whose categories are included in categories 1 and 6 to 9 can be transmitted on F-SCH. As such, F-SCH is able to support variable rate voice frame transmission and traffic frames containing the voice service data and the data service data. Such solution provided in this embodiment not only fully utilizes the transmission capacity of the channels, but also reduces voice dither and improves trunking service quality.

When MuxPDU Type 2 is adopted for the data transmission, the process is similar with the process using MuxPDU Type 1. In the case of using MuxPDU Type 2, the categories that support the signaling transmission and are supported by DCCH also include categories 2 to 5, and the categories that support the user plane data transmission and are supported by DCCH also include category 1 and categories 6 to 9. However, the process of using MuxPDU Type 2 differs with the process using MuxPDU Type 1 in that the transmission rate, the frame format including MuxPDU headers of the categories, etc., are different. However, the processes of multiplexing and demultiplexing frames based on frame format are well known and will not be explained herein.

In another embodiment of the present invention, an FCH is adopted as the first channel, and there are some differences compared with the processes described in the above embodiments.

Specifically, in step 203, the Mux sub-layer of the BSC, which covers the MS of the receiving end, selects a category from the categories that support the signaling transmission and are supported by the FCH, multiplexes the signaling to form MuxPDUs, and transmits the MuxPDUs to the F-FCH. The Mux sub-layer of the BSC, which covers the MS of the receiving end, also selects a category from the categories that support the user plane data transmission and are supported by the FCH, multiplexes the user plane data to form MuxPDUs and transmits the MuxPDUs to F-SCH.

Accordingly, in Step 206, the Mux sub-layer of the MS of the receiving end demultiplexes the MuxPDUs received through the F-FCH according to the frame format of the category which supports the signaling transmission and is supported by the FCH, recognizes the signaling, and demultiplexes the MuxPDUs received through F-SCH according to the frame format of the category which supports the user plane data transmission and is supported by the FCH and recognizes the user plane data.

When MuxPDU Type 1 is adopted for the data transmission, the categories that support the signaling transmission and are supported by the FCH include categories 2 to 5, and categories that support the user plane data transmission and are supported by the FCH include category 1 and categories 6 to 12. When MuxPDU Type 2 is adopted for the data transmission, the categories that support the signaling transmission and are supported by the FCH include categories 2 to 5, category 10, categories 10 to 14, category 18 and categories 20 to 21, and categories that support the user plane data transmission and are supported by the FCH include category 1, categories 6 to 8, category 11, categories 15 to 17, category 19 and categories 22 to 25. The Mux sub-layer of the MS of the receiving end multiplexes frames based on corresponding frame format of categories described in the preceding description and the Mux sub-layer of the BSC which covers the MS of the receiving end demultiplexes frames based on corresponding frame format of the categories described above. Similarly, when a category which supports the multiplexing of user plane data and signaling is adopted to form the traffic frames for the signaling transmission, the primary traffic field and/or the secondary traffic field, which should be filled with user plane data, shall be filled with invalid data. When frames are demultiplexed based on a category which supports the multiplexing of user plane data and signaling so that the signaling can be recognized, the data in the signaling traffic field shall be recognized but the data in the primary traffic and/or secondary traffic field shall be ignored, i.e., not be accessed or processed.

An embodiment of the present invention also provides another data transmission solution for digital trunking service. In this embodiment, a first reverse channel is adopted for signaling and the user plane data transmission, a first forward channel is adopted for the signaling transmission and a second forward channel is adopted for the user plane data transmission. The MS of the transmitting end, while transmitting signaling and/or user plane data, selects a category for the signaling transmission from the categories that support the signaling transmission and selects a category for the user plane data transmission from the categories that support the user plane data transmission, then the MS multiplexes the signaling and/or user plane data to form traffic frames on the reverse link and transmits the traffic frames to the first reverse channel. The BSC that covers the MS of the transmitting end receives traffic frames containing the signaling and/or user plane data through the first reverse channel, demultiplexes the traffic frames based on the frame format of corresponding category, recognizes the signaling and/or user plane data and transmits the signaling and/or user plane data to the BSC that covers the MS of the receiving end. The BSC that covers the MS of the receiving end selects a category for the signaling transmission from the categories that support the signaling transmission, multiplexes the signaling to form the traffic frames, transmits the traffic frames containing the signaling to the first forward channel, selects a category for the user plane data transmission from the categories that support the user plane data transmission, multiplexes the user plane data to form the traffic frames and transmits the traffic frames containing the user plane data to the second forward channel. The MS of the receiving end receives traffic frames containing the signaling through the first forward channel, demultiplexes the traffic frames containing the signaling based on the frame format of corresponding category that supports the signaling transmission, and recognizes the signaling. The MS of the receiving end also receives traffic frames containing the user plane data through the second forward channel, demultiplexes the traffic frames containing the user plane data based on the frame format of corresponding category that supports the user plane data transmission and recognizes the user plane data.

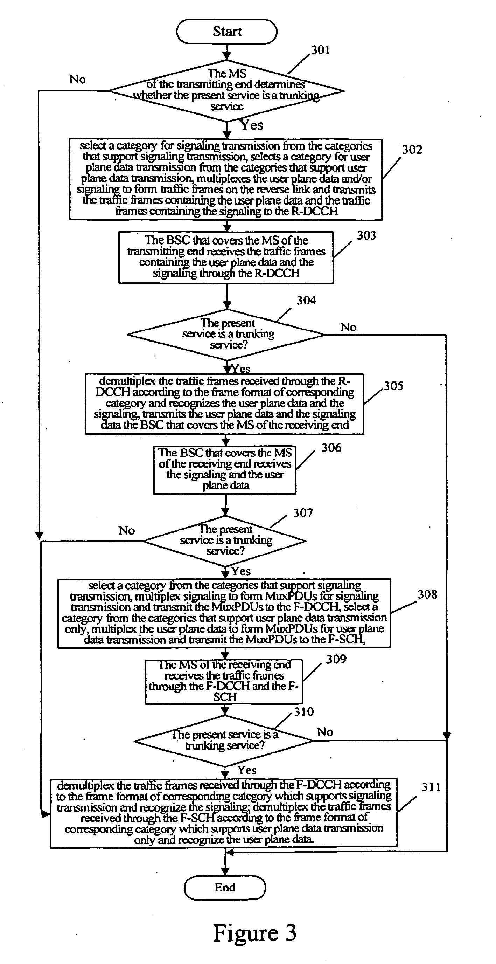

In this embodiment, the first channel may be a DCCH or an FCH; the second channel may be an SCH. The traffic frames comprise MuxPDUs. The processes of demultiplexing and multiplexing frames are performed in the Mux sub-layers in MAC layers of the MS and in the Mux sub-layers in MAC layers of the BSC respectively. In this embodiment, MuxPDU Type 1 or 2 is adopted for the data transmission according to the voice coding and decoding format adopted by the service. The embodiment is further explained with reference to Figure 3 and herein, a DCCH is adopted as the first channel, an SCH is adopted as the second channel and MuxPDU Type 1 is adopted for the data transmission. As shown in Figure 3, the procedure of the embodiment includes:
Step 301: Before receives user plane data and/or signaling from an upper layer of an MS of a transmitting end, the Mux sub-layer of the MS of the transmitting end determines whether the present service is a trunking service. If the present service is a trunking service, perform Step 302; otherwise terminate the procedure.
Step 302: The Mux sub-layer of the MS of the transmitting end selects a category for the signaling transmission from the categories that support the signaling transmission, selects a category for the user plane data transmission from the categories that support the user plane data transmission, multiplexes the user plane data and/or signaling to form traffic frames on the reverse link and transmits the traffic frames containing the user plane data and the traffic frames containing the signaling to R-DCCH, so that the data are transmitted to the PHY layer of the MS of the transmitting end and eventually to the PHY layer of the BSC that covers the MS of the transmitting end.

The frame formats which support the signaling transmission under MuxPDU Type 1 include categories 2 to 5, and the categories which support the user plane data transmission include categories 1 to 4 and categories 6 to 12. Therefore the Mux sub-layer selects a category from categories 2 to 5, based on the factors including data length of signaling, to construct frames for the signaling transmission, and selects another category from category 1 and categories 6 to 9, based on the factors including length of the voice service data or data service data, to construct frames for the user plane data transmission. For example, when the voice service data received is 80 bits long, and there is no signaling or the data service data available for multiplexing, category 10 is selected to multiplex the voice service data. When the received the voice service data is 80 bits long and the length of the received the data service data is greater than 88 bits, category 6 shall be selected for multiplexing the voice service data of 80 bits and the data service data of 88 bits to form the traffic.

R-DCCH supports MuxPDUs of categories 10 to 12. Categories 10 to 12 have lower transmission rates than the transmission rate of categories 1 to 9 at 9,600 bits/second, thus a channel transmission power will be lowered during a data transmission process when a category from categories 10 to 12 is used. Therefore, using the solution provided by this embodiment, R-DCCH supports variable channel transmission rates, which saves channel transmission power.
Step 303: The PHY layer of the BSC that covers the MS of the transmitting end transmits the MuxPDUs through R-DCCH to the Mux sub-layer in the MAC layer.
Step 304: Before demultiplexes the MuxPDUs, the Mux sub-layer of the MAC layer of the BSC that covers the MS of the transmitting end determines whether the present service is a trunking service. If the present is a trunking service, perform Step 305; otherwise terminate the procedure.
Step 305: The Mux sub-layer of the BSC that covers the MS of the transmitting end demultiplexes the traffic frames received through R-DCCH according to the frame format of corresponding category under MuxPDU Type 1 and recognizes the data payload, i.e., the data service data, the voice service data and/or the signaling, transmits the data payload to the upper layer of this BSC, so that the data payload can be transmitted through a packet-switched network to an upper layer of the BSC that covers the MS of the receiving end.

In this step the Mux sub-layer of the BSC that covers the MS of the transmitting end can recognize all categories under MuxPDU Type 1, i.e., categories 1 to 12.
Step 306: The upper layer of the BSC that covers the MS of the receiving end receives data packets through the packet-switched network and divides the packets into data payloads.
Step 307: Before multiplexes the signaling and/or user plane data to form traffic frames respectively, the Mux sub-layer in the MAC layer of the BSC that covers the MS of the receiving end determines whether the present service is a trunking service. If the present service is a trunking service, perform Step 308; otherwise terminate the procedure.
Step 308: The Mux sub-layer of the BSC that covers the MS of the receiving end selects a category from the categories that support the signaling transmission, multiplexes signaling to form MuxPDUs for the signaling transmission and transmits the MuxPDUs to F-DCCH, selects a category from the categories that support the user plane data transmission, multiplexes the user plane data to form MuxPDUs for the user plane data transmission and transmits the MuxPDUs to F-SCH, so that the data are transmitted to the PHY layer of the BSC that covers the MS of the receiving end and eventually to the PHY layer of the MS of the receiving end.

It can be seen from the frame formats under MuxPDU Type 1 that the categories that support the signaling transmission include categories 2 to 5, and the categories that support the user plane data transmission include categories 1 and categories 6 to 12. Therefore the Mux sub-layer of the BSC that covers the MS of the receiving end selects a category, based on the data length of the received signaling, from categories 2 to 5 to construct frames for the signaling transmission, and selects a category from categories 1 and 6 to 12 to construct frames for the user plane data transmission according to the data length of the received voice service or data service data.

The primary traffic fields of the frames are filled with invalid data when categories 2 to 4 are adopted to multiplex the signaling.
Step 309: The PHY layer of the MS of the receiving end receives the MuxPDUs containing the signaling through F-DCCH and receives the MuxPDUs containing the user plane data through F-SCH to the Mux sub-layer in the MAC layer of the MS of the receiving end.
Step 310: Before demultiplexes the MuxPDUs, the Mux sub-layer of the MS of the receiving end determines whether the present service is a trunking service. If the present is a trunking, perform Step 311; otherwise terminate the procedure.
Step 311: The Mux sub-layer of the MS of the receiving end demultiplexes the traffic frames received through F-DCCH according to the frame format of corresponding category which supports the signaling transmission and recognizes the signaling; demultiplexes the traffic frames received through F-SCH according to the frame format of corresponding category which supports the user plane data transmission and recognizes the user plane data. The Mux sub-layer of the MS of the receiving end then transmits the recognized data payload, i.e., data service data, the voice service data and signaling, to the upper layer of the MS of the receiving end.

As the categories that support the signaling transmission include categories 2 to 5, and the categories that support the user plane data transmission include categories 1 and 6 to 12, the Mux sub-layer of the MS of the receiving end demultiplexes the MuxPDUs according to the frame formats of categories 2 to 5 to recognize the signaling and according to the frame formats of categories 1 and 6 to 12 to recognize the user plane data.

When the category of the MuxPDU is included in the categories 2 to 4, the data of signaling traffic shall be recognized while the data in the primary traffic fields shall be ignored, i.e., not be accessed or processed.

In the solution provided by the above embodiment of the present invention for digital trunking services in the present mobile communication network, on the reverse link, when the Mux sub-layer of the MS of the transmitting end demultiplexes the traffic frames or when the Mux sub-layer of the BSC which covers the MS of the transmitting end multiplexes the data to form the traffic frames, the Mux sub-layers determine whether the present service is a trunking service by accessing a the local SO. If the present service is a trunking service, the processes of multiplexing and demultiplexing are modified in a software program, so that traffic frames whose categories are included in transmission categories 1 to 4 and 6 to 12 can be used to transmit the user plane data on R-DCCH. As such, R-DCCH is able to support traffic frames of variable channel transmission rates, to save channel transmission power and to support voice frames of variable rates. On the forward link, when the Mux sub-layer of the MS of the receiving end demultiplexes the traffic frames or when the Mux sub-layer of the BSC which covers the MS of the receiving end multiplexes the traffic frames, the Mux sub-layers determine whether the present service is a trunking service by accessing the local SO. If the present service is a trunking service, the processes of multiplexing and demultiplexing are modified in a software program, so that traffic frames whose categories are included in transmission category 1 and categories 6 to 12 can be transmitted on F-SCH. As such, F-SCH is able to support voice frame transmission of variable rates, traffic frames multiplexed with the voice service data and data service data, and variable channel transmission rates. Such solution provided in this embodiment not only fully utilizes the transmission capacity of the channels, but also reduces voice dither and improves trunking service quality.

When MuxPDU Type 2 is adopted for the data transmission in trunking services, the process is similar to the process described in the above embodiments. The categories that support user plane data include categories 1 to 4, 6 to 13, 15 to 20, and 22 to 25; the categories that support the signaling transmission include categories 2 to 5, 10, 12 to 14, 18, and 20 to 21; and the categories that support user plane transmission include categories 1, 6 to 9, 11, 15 to 17, 19 and 22 to 25. Though corresponding transmission rates and frame formats including MuxPDU headers of the categories under MuxPDU Type 2 are different from those under MuxPDU Type 1, the processes of multiplexing and demultiplexing, which are based on frame formats, are a part of common technology and frame formats do not affect the effect of the solution provided by the embodiments of the present invention.

As above, the solutions provided by the embodiments of the present invention for the data transmission in a digital trunking system, enable F-SCH to support not only full rate voice frames, but also variable rate voice frame transmission in a trunking service where voice service and data service are transmitted simultaneously, so that multiplex transmission of the voice service data and the data service data becomes possible, which reduces voice dither and improve communication quality. In addition, when the solutions are adopted for the data transmission, the R/F-DCCH and F-SCH are able to support variable channel transmission rates and channel transmission power is thus saved. Furthermore, R-DCCH and F-SCH also support the transmission of variable rate voice frames.

Though the present invention has been illustrated and described by some preferred embodiments, those skilled in the art should understand that various changes may be made in form and detail without departing from the scope of the present invention and therefore should be covered in the protection scope of the present invention defined by the appended claims and its equivalents.

## Claims

1. A method for data transmission of user plane data in a digital trunking system, in which signaling and user plane data in a reverse direction is transmitted on a reverse channel, signaling in forward direction is transmitted on a forward channel for transmitting signaling, and user plane data in forward direction is transmitted on a forward channel for transmitting user plane data, comprising:
receiving, by a Base Station Controller, BSC, signaling and/or user plane data;
and **characterized by** comprising:
selecting (203, 308), by the BSC, a category for signaling from a plurality of categories which support signaling transmission and are supported by the forward channel for transmitting signaling;
multiplexing (203, 308), by the BSC, the signaling to form traffic frames according to the category for signaling and transmitting the traffic frames containing the signaling through the forward channel for transmitting signaling to a mobile station of a receiving end;
selecting (203, 308), by the BSC, a category for user plane data from a plurality of categories which support user plane data and are supported by the forward channel for transmitting signaling, and
multiplexing (203, 308), by the BSC, user plane data to form traffic frames according to the category for user plane data and transmitting the traffic frames containing user plane data through the forward channel for transmitting user plane data to a mobile station of a receiving end.

2. The method of claim 1, further comprising:
receiving (204, 309), by a Mobile Station, MS, of a receiving end, the traffic frames containing the signaling through the forward channel for transmitting signaling,
demultiplexing (206, 311), by the MS, the traffic frames containing the signaling based on the category for signaling and recognizing the signaling;
receiving (204, 309), by the MS, the traffic frames containing the user plane data through the forward channel for transmitting user plane data, and
demultiplexing (206, 311), by the MS, the traffic frames containing the user plane data based on the category for user plane data and recognizing the user plane data.

3. The method of claim 2, wherein demultiplexing the traffic frames comprises:
demultiplexing the traffic frames if the signaling and/or the user plane data are the data of the trunking service (202, 205, 301, 304, 307, 310).

4. The method of claim 1, wherein the traffic frame comprises a multiplex sublayer protocol data unit, MuxPDU, the demultiplexing the traffic frames is implemented in a multiplex, Mux, sub-layer of a Media Access Control, MAC, layer of the MS, and the multiplexing the traffic frames is implemented in the Mux sub-layer of the MAC layer of the BSC.

5. The method of claim 1, wherein the user plane data of traffic frames according to the category for signaling is voice service data, and the user plane data of traffic frames according to the category for user plane data is either voice service data or data service data.

6. The method of claim 1, wherein the method is a method of a trunking service.

7. The method of claim 6, wherein the method is applied for the trunking service (202,205,301,304,307,310).

8. The method of claim 6 or 7, wherein whether present service is a trunking service is determined according to a Service Option, SO, saved locally.

9. The method of claim 1, wherein said multiplexing the signaling to form the traffic frames according to the category for signaling comprises filling of fields in the traffic frames, which should be filled with user plane data, with invalid data in case the selected category for signaling supports multiplexing of signaling and user plane data.

10. The method of claim 1 or 9, wherein when demultiplexing the traffic frames containing the signaling and recognizing the signaling, if the category for signaling used for the demultiplexing supports the multiplexing of signaling and the user plane data, ignoring the fields in the traffic frames which should be filled with the user plane data.

11. The method of claim 4, wherein the forward channel for transmitting signaling is a Dedicated Control Channel, DCCH, the reverse channel is a DCCH, the forward channel for transmitting user plane data is a Supplementary Channel, SCH, a type of the MuxPDU is MuxPDU Type 1, and the plurality of categories are categories of MuxPDU Type 1;
the plurality of categories which support the signaling transmission and are supported by the forward channel for transmitting signaling comprises categories 2 to 5; and
the plurality of categories which support the user plane data transmission and are supported by the forward channel for transmitting signaling comprises categories 1 and 6 to 9.

12. The method of claim 4, wherein the forward channel for transmitting signaling is a Fundamental Channel, FCH, the reverse channel is an FCH, the forward channel for transmitting user plane data is an SCH, a type of the MuxPDU is MuxPDU Type 1, and the plurality of categories are categories of MuxPDU Type 1;
the plurality of categories which support the signaling transmission and are supported by the forward channel for transmitting signaling comprises categories 2 to 5; and
the plurality of categories which support the user plane data transmission and are supported by the forward channel for transmitting signaling comprises categories 1 and 6 to 12.

13. The method of claim 4, wherein the forward channel for transmitting signaling is a DCCH, the reverse channel is a DCCH, the forward channel for transmitting user plane data is an SCH, a type of the MuxPDU is MuxPDU Type 2, and the plurality of categories are categories of the MuxPDU Type 2;
the plurality of categories that support the signaling transmission and are supported by the forward channel for transmitting signaling comprises categories 2 to 5; and
the plurality of categories that support the user plane data transmission and are supported by forward channel for transmitting signaling comprises categories 1 and 6 to 9.

14. The method of claim 4, wherein the forward channel for transmitting signaling is an FCH, the reverse channel is an FCH, the forward channel for transmitting user plane data is an SCH, a type of the MuxPDU is MuxPDU Type 2, and the plurality of categories are categories of the MuxPDU Type 2;
the plurality of categories that support the signaling transmission and are supported by the forward channel for transmitting signaling comprises categories 2 to 5, 10, 12 to 14, 18 and 20 to 21; and
the plurality of categories that support the user plane data transmission and are supported by the forward channel for transmitting signaling comprises categories 1, 6 to 9, 11, 15 to 17, 19 and 22 to 25.

15. The method of claim 1, comprising
multiplexing (302), by a mobile station, MS, the user plane data to form traffic frames according to the category for user plane data and
transmitting the traffic frames containing the user plane data through the reverse channel.

16. The method of claim 15, comprising:
selecting (302), by the MS, a category for signaling from the plurality of categories which support signaling transmission and multiplexing the signaling to form traffic frames containing the signaling according to the category for signaling, and
selecting (302), by the MS, a category for user plane data from the plurality of categories which at least support the user plane data transmission.

17. The method of claim 1, wherein the reverse channel is received in a first BSC (102, 303) covering an MS of a transmitting end, the forward channel for transmitting signaling is transmitted from a second BSC (103) covering the MS of the receiving end, and the forward channel for transmitting user plane data is transmitted from the second BSC (103).

18. A system comprising a base station controller, BSC, for data transmission of user plane data in a digital trunking system, in which signaling and user plane data in a reverse direction is transmitted on a reverse channel, signaling in forward direction is transmitted on a forward channel for transmitting signaling, and user plane data in forward direction is transmitted on a forward channel for transmitting user plane data,
**characterized in that** the BSC comprises processing means configured for
selecting (203, 308) a category for signaling from a plurality of categories, which support signaling transmission and are supported by the forward channel for transmitting signaling;
multiplexing (203, 308) the signaling to form traffic frames according to the category for signaling and transmitting the traffic frames containing the signaling through the forward channel for transmitting signaling to a mobile station of a receiving end;
selecting (203, 308) a category for user plane data from a plurality categories which support user plane data and are supported by the forward channel for transmitting signaling, and
multiplexing (203, 308) user plane data to form traffic frames according to the category for user plane data and transmitting the traffic frames containing user plane data through the forward channel for transmitting user plane data to a mobile station of a receiving end.

19. The system of claim 18, comprising a mobile station, MS, transmitting on the reverse channel to the BSC, receiving signaling from the BSC on the forward channel for transmitting signaling, and receiving user plane data in forward direction from the BSC on the forward channel for transmitting user plane data, the MS comprising processing means configured for:
selecting (206, 311) a category for signaling from a plurality of categories, which support signaling transmission and are supported by the forward channel for transmitting signaling;
demultiplexing (206, 311) the traffic frames containing the signaling based on the category for signaling and recognizing the signaling;
selecting (206, 311) a category for user plane data from categories which support user plane data and are supported by the forward channel for transmitting signaling; and
demultiplexing (206, 311) the traffic frames containing the user plane data based on the category for user plane data and recognizing the user plane data.

20. The system of claim 19, wherein demultiplexing the traffic frames comprises:
demultiplexing the traffic frames if the signaling and/or the user plane data are the data of the trunking service (202, 205, 301, 304, 307, 310).

21. The system of claim 20, wherein the traffic frame comprises a multiplex protocol data unit, MuxPDU; the demultiplexing the traffic frames is implemented in a multiplex, Mux, sub-layer of a Media Access Control, MAC, layer of the MS, and the multiplexing the traffic frames is implemented in the Mux sub-layer of the MAC layer of the BSC.

22. The system of claim 18, wherein the user plane data of traffic frames according to the category for signaling is voice service data, and the user plane data of traffic frames according to the category for user plane data is either voice service data or data service data.

23. The system of claim 18, wherein the system provides trunking service.

24. The system of claim 23, wherein the system applies the processing for the trunking service (202, 205, 301, 304, 307, 310).

25. The system of claim 23 or 24, wherein whether present service is a trunking service is determined according to a Service Option, SO, saved locally.

26. The system of claim 18, wherein said multiplexing the signaling to form the traffic frames according to the category for signaling comprises filling of fields in the traffic frames, which should be filled with user plane data, with invalid data in case the selected category for signaling supports multiplexing of signaling and user plane data.

27. The system of claim 18 or 26, wherein when demultiplexing the traffic frames containing the signaling and recognizing the signaling, if the category for signaling used for the demultiplexing supports the multiplexing of signaling and the user plane data, ignoring the fields in the traffic frames which should be filled with the user plane data.

28. The system of claim 21, wherein the forward channel for transmitting signaling is a Dedicated Control Channel, DCCH, the reverse channel is a DCCH, the channel for transmitting user plane data is a Supplementary Channel, SCH, a type of the MuxPDU is MuxPDU Type 1, and the plurality of categories are categories of MuxPDU Type 1;
the plurality of categories which support the signaling transmission and are supported by the forward channel for transmitting signaling comprises categories 2 to 5; and
the plurality of categories which support the user plane data transmission and are supported by the forward channel for transmitting signaling comprise categories 1 and 6 to 9.

29. The system of claim 21, wherein the forward channel for transmitting signaling is a Fundamental Channel, FCH, the reverse channel is an FCH, the forwardd channel for transmitting user plane data is an SCH, a type of the MuxPDU is MuxPDU Type 1, and the plurality of categories are categories of MuxPDU Type 1;
the plurality of categories which support the signaling transmission and are supported by the forward channel for transmitting signaling comprises categories 2 to 5; and
the plurality of categories which support the user plane data transmission and are supported by the forward channel for transmitting signaling comprise categories 1 and 6 to 12.

30. The system of claim 21, wherein the forward channel for transmitting signaling is a DCCH, the reverse channel is a DCCH, the forward channel for transmitting user plane data is an SCH, a type of the MuxPDU is MuxPDU Type 2, and the plurality of categories are categories of the MuxPDU Type 2;
the plurality of categories that support the signaling transmission and are supported by the forward channel for transmitting signaling comprises categories 2 to 5; and
the plurality of categories that support the user plane data transmission and are supported by forward channel for transmitting signaling comprises categories I and 6 to 9.

31. The system of claim 21, wherein the forward channel for transmitting signaling is a Fundamental Channel, FCH, the reverse channel is an FCH, the forward channel for transmitting user plane data is an SCH, a type of the MuxPDU is MuxPDU Type 1, and the plurality of categories are categories of MuxPDU Type 1;
the plurality of categories that support the signaling transmission and are supported by the forward channel for transmitting signaling comprises categories 2 to 5, 10, 12 to 14, 18, and 20 to 21; and
the plurality of categories that support the user plane data transmission and are supported by the forward channel for transmitting signaling comprises categories 1, 6 to 9, 11, 15 to 17, 19 and 22 to 25.

32. The system of claim 18, comprising a mobile station, MS, transmitting on the reverse channel to the BSC, receiving signaling from the BSC on the forward channel for transmitting signaling, and receiving user plane data in forward direction in the forward channel for transmitting user plane data, the MS comprising processing means configured for
multiplexing (302) the user plane data to form traffic frames according to the category for user plane data and
transmitting the traffic frames containing the user plane data through the reverse channel.

33. The system of claim 32, wherein the MS comprises processing means configured for:
selecting (302) the category for signaling from the plurality of categories which support signaling transmission and multiplexing the signaling to form traffic frames containing the signaling according to the category for signaling, and
selecting (302) category for user plane data from the plurality of categories which at least support the user plane data transmission.

34. The system of claim 18, wherein the system comprises at least two BSCs, a first BSC (103) being arranged for transmitting (302) the signaling on the forward channel for transmitting signaling and the user plane data on the forward channel for transmitting user plane data to an MS of a receiving end, and a second BSC (102) being arranged for receiving (201, 306) the signaling and the user plane data on the reverse channel from an MS of a transmitting end, wherein the signaling or the user plane data is to be transmitted to the first BSC.

35. A mobile station, MS, of a receiving end adapted to:
receive from a BSC signaling in forward direction on a forward channel for transmitting signaling multiplexed by the BSC to form traffic frames according to a category for signaling selected by the BSC from a plurality of categories which support signaling transmission and are supported by the forward channel for transmitting signaling and,receive from the BSC user plane data in forward direction on a forward channel for transmitting user plane data multiplexed by the BSC to form traffic frames according to a category for user plane data selected by the BSC from a plurality of categories which support user plane data transmission and are supported by the forward channel for transmitting signaling;
demultiplex (206, 311) the traffic frames containing the signaling based on the category for signaling from a plurality of categories which support signaling transmission and are supported by the forward channel for transmitting signaling, and recognize the signaling; and
demultiplex (206, 311) the traffic frames containing the user plane data based on the category for user plane data from categories which support user plane data and are supported by the forward channel for transmitting signaling, and recognize the user plane data.

## Patentansprüche

1. Verfahren zur Datenübertragung von Benutzerebenendaten in einem digitalen Bündelungssystem, bei dem Signalisierung und Benutzerebenendaten in eine Rückrichtung auf einem Rückkanal übertragen werden, Signalisierung in Vorwärtsrichtung auf einem Vorwärtskanal zum Übertragen von Signalisierung übertragen wird und Benutzerebenendaten in Vorwärtsrichtung auf einem Vorwärtskanal zum Übertragen von Benutzerebenendaten übertragen werden, umfassend:
Empfangen von Signalisierung und/oder Benutzerebenendaten durch einen Basisstationscontroller BSC;
und **dadurch gekennzeichnet, dass** es Folgendes umfasst:
Wählen (203, 308) einer Kategorie zur Signalisierung von mehreren Kategorien durch den BSC, die Signalisierungsübertragung unterstützen und durch den Vorwärtskanal zum Übertragen von Signalisierung unterstützt werden;
Multiplexen (203, 308) der Signalisierung durch den BSC zum Ausbilden von Verkehrsrahmen gemäß der Kategorie zur Signalisierung und zum Übertragen der die Signalisierung enthaltenden Verkehrsrahmen durch den Vorwärtskanal zum Übertragen von Signalisierung an eine Mobilstation eines empfangenden Endes;
Wählen (203, 308) einer Kategorie für Benutzerebenendaten durch den BSC unter mehreren Kategorien, die Benutzerebenendaten unterstützen und durch den Vorwärtskanal zum Übertragen von Signalisierung unterstützt werden und
Multiplexen (203, 308) von Benutzerebenendaten durch den BSC zum Ausbilden von Verkehrsrahmen gemäß der Kategorie für Benutzerebenendaten und Übertragen der Benutzerebenendaten enthaltenden Verkehrsrahmen durch den Vorwärtskanal zum Übertragen von Benutzerebenendaten an eine Mobilstation eines empfangenden Endes.

2. Verfahren nach Anspruch 1, weiterhin umfassend:
Empfangen (204, 309) der die Signalisierung enthaltenden Verkehrsrahmen durch eine Mobilstation MS eines empfangenden Endes durch den Vorwärtskanal zum Übertragen von Signalisierung,
Demultiplexen (206, 311) der die Signalisierung enthaltenden Verkehrsrahmen durch die MS auf der Basis der Kategorie zur Signalisierung und zum Erkennen der Signalisierung;
Empfangen (204, 309) der die Benutzerebenendaten enthaltenden Verkehrsrahmen durch die MS durch den Vorwärtskanal zum Übertragen von Benutzerebenendaten und
Demultiplexen (206, 311) der die Benutzerebenendaten enthaltenden Verkehrsrahmen durch die MS auf der Basis der Kategorie für Benutzerebenendaten und Erkennen der Benutzerebenendaten.

3. Verfahren nach Anspruch 2, wobei das Demultiplexen der Verkehrsrahmen Folgendes umfasst:
Demultiplexen der Verkehrsrahmen, falls die Signalisierung und/oder die Benutzerebenendaten die Daten des Bündelungsdienstes (202, 205, 301, 304, 307, 310) sind.

4. Verfahren nach Anspruch 1, wobei der Verkehrsrahmen eine Multiplexteilschichtprotokolldateneinheit MuxPDU umfasst, wobei das Demultiplexen der Verkehrsrahmen in einer Multiplexteilschicht Mux einer MAC-Schicht (Media Access Control) der MS implementiert wird und das Multiplexen der Verkehrsrahmen in der Mux-Teilschicht der MAC-Schicht des BSC implementiert wird.

5. Verfahren nach Anspruch 1, wobei die Benutzerebenendaten von Verkehrsrahmen gemäß der Kategorie zur Signalisierung Sprachdienstdaten sind und die Benutzerebenendaten von Verkehrsrahmen gemäß der Kategorie für Benutzerebenendaten entweder Sprachdienstdaten oder Datendienstdaten sind.

6. Verfahren nach Anspruch 1, wobei das Verfahren ein Verfahren eines Bündelungsdienstes ist.

7. Verfahren nach Anspruch 6, wobei das Verfahren für den Bündelungsdienst (202, 205, 301, 304, 307, 310) angewendet wird.

8. Verfahren nach Anspruch 6 oder 7, wobei gemäß einer lokal gespeicherten Dienstoption SO bestimmt wird, ob der vorliegende Dienst ein Bündelungsdienst ist.

9. Verfahren nach Anspruch 1, wobei das Multiplexen der Signalisierung zum Ausbilden der Verkehrsrahmen gemäß der Kategorie zur Signalisierung das Füllen von Feldern in den Verkehrsrahmen, die mit Benutzerebenendaten gefüllt sein sollten, mit ungültigen Daten für den Fall umfasst, dass die gewählte Kategorie zur Signalisierung das Multiplexen von Signalisierung und Benutzerebenendaten unterstützt.

10. Verfahren nach Anspruch 1 oder 9, wobei, wenn die die Signalisierung enthaltenden Verkehrsrahmen gedemultiplext und die Signalisierung erkannt werden, falls die Kategorie zur Signalisierung, die für das Demultiplexen verwendet wird, das Multiplexen von Signalisierung und den Benutzerebenendaten unterstützt, die Felder in den Verkehrsrahmen, die mit den Benutzerebenendaten gefüllt sein sollten, ignoriert werden.

11. Verfahren nach Anspruch 4, wobei der Vorwärtskanal zum Übertragen von Signalisierung ein Dedicated Control Channel DCCH ist, der Rückkanal ein DCCH ist, der Vorwärtskanal zum Übertragen von Benutzerebenendaten ein Supplementary Channel SCH ist, ein Typ des MuxPDU ein MuxPDU Typ 1 ist und die mehreren Kategorien Kategorien von MuxPDU Typ 1 sind;
wobei die mehreren Kategorien, die die Signalisierungsübertragung unterstützen und durch den Vorwärtskanal zum Übertragen von Signalisierung unterstützt werden, Kategorien 2 bis 5 umfassen; und
die mehreren Kategorien, die die Benutzerebenendatenübertragung unterstützen und durch den Vorwärtskanal zum Übertragen von Signalisierung unterstützt werden, Kategorien 1 und 6 bis 9 umfassen.

12. Verfahren nach Anspruch 4, wobei der Vorwärtskanal zum Übertragen von Signalisierung ein Fundamental Channel FCH ist, der Rückkanal ein FCH ist, der Vorwärtskanal zum Übertragen von Benutzerebenendaten ein SCH ist, ein Typ des MuxPDU ein MuxPDU Typ 1 ist und die mehreren Kategorien Kategorien von MuxPDU Typ 1 sind;
wobei die mehreren Kategorien, die die Signalisierungsübertragung unterstützen und durch den Vorwärtskanal zum Übertragen von Signalisierung unterstützt werden, Kategorien 2 bis 5 umfassen; und
die mehreren Kategorien, die die Benutzerebenendatenübertragung unterstützen und durch den Vorwärtskanal zum Übertragen von Signalisierung unterstützt werden, Kategorien 1 und 6 bis 12 umfassen.

13. Verfahren nach Anspruch 4, wobei der Vorwärtskanal zum Übertragen von Signalisierung ein DCCH ist, der Rückkanal ein DCCH ist, der Vorwärtskanal zum Übertragen von Benutzerebenendaten ein SCH ist, ein Typ des MuxPDU ein MuxPDU Typ 2 ist und die mehreren Kategorien Kategorien von MuxPDU Typ 2 sind;
wobei die mehreren Kategorien, die die Signalisierungsübertragung unterstützen und durch den Vorwärtskanal zum Übertragen von Signalisierung unterstützt werden, Kategorien 2 bis 5 umfassen; und
die mehreren Kategorien, die die Benutzerebenendatenübertragung unterstützen und durch den Vorwärtskanal zum Übertragen von Signalisierung unterstützt werden, Kategorien 1 und 6 bis 9 umfassen.

14. Verfahren nach Anspruch 4, wobei der Vorwärtskanal zum Übertragen von Signalisierung ein FCH ist, der Rückkanal ein FCH ist, der Vorwärtskanal zum Übertragen von Benutzerebenendaten ein SCH ist, ein Typ des MuxPDU ein MuxPDU Typ 2 ist und die mehreren Kategorien Kategorien von MuxPDU Typ 2 sind;
wobei die mehreren Kategorien, die die Signalisierungsübertragung unterstützen und durch den Vorwärtskanal zum Übertragen von Signalisierung unterstützt werden, Kategorien 2 bis 5, 10, 12 bis 14, 18 und 20 bis 21 umfassen; und
die mehreren Kategorien, die die Benutzerebenendatenübertragung unterstützen und durch den Vorwärtskanal zum Übertragen von Signalisierung unterstützt werden, Kategorien 1, 6 bis 9, 11, 15 bis 17, 19 und 22 bis 25 umfassen.

15. Verfahren nach Anspruch 1, umfassend:
Multiplexen (302) der Benutzerebenendaten durch eine Mobilstation MS zum Ausbilden von Verkehrsrahmen gemäß der Kategorie für Benutzerebenendaten und
Übertragen der die Benutzerebenendaten enthaltenden Verkehrsrahmen durch den Rückkanal.

16. Verfahren nach Anspruch 15, umfassend:
Wählen (302) einer Kategorie zur Signalisierung durch die MS aus den mehreren Kategorien, die Signalisierungsübertragung unterstützen, und Multiplexen der Signalisierung zum Ausbilden von die Signalisierung enthaltenden Verkehrsrahmen gemäß der Kategorie zur Signalisierung, und
Wählen (302) einer Kategorie für Benutzerebenendaten durch die MS aus den mehreren Kategorien, die die Benutzerebenendatenübertragung zumindest unterstützen.

17. Verfahren nach Anspruch 1, wobei der Rückkanal in einem ersten BSC (102, 303) empfangen wird, der eine MS eines übertragenden Endes abdeckt, der Vorwärtskanal zum Übertragen von Signalisierung von einem zweiten BSC (103) übertragen wird, der die MS des empfangenden Endes abdeckt, und der Vorwärtskanal zum Übertragen von Benutzerebenendaten von dem zweiten BSC (103) übertragen wird.

18. System umfassend einen Basisstationscontroller BSC zur Datenübertragung von Benutzerebenendaten in einem digitalen Bündelungssystem, in dem Signalisierung und Benutzerebenendaten in einer Rückrichtung auf einem Rückkanal übertragen werden, Signalisierung in Vorwärtsrichtung auf einem Vorwärtskanal zum Übertragen von Signalisierung übertragen wird und Benutzerebenendaten in Vorwärtsrichtung auf einem Vorwärtskanal zum Übertragen von Benutzerebenendaten übertragen werden,
**dadurch gekennzeichnet, dass** der BSC Verarbeitungsmittel umfasst, die konfiguriert sind zum
Wählen (203, 308) einer Kategorie zur Signalisierung aus mehreren Kategorien, die Signalisierungsübertragung unterstützen und durch den Vorwärtskanal zum Übertragen von Signalisierung unterstützt werden;
Multiplexen (203, 308) der Signalisierung zum Ausbilden von Verkehrsrahmen gemäß der Kategorie zur Signalisierung und Übertragen der die Signalisierung enthaltenden Verkehrsrahmen durch den Vorwärtskanal zum Übertragen von Signalisierung an eine Mobilstation eines empfangenden Endes;
Wählen (203, 308) einer Kategorie für Benutzerebenendaten aus mehreren Kategorien, die Benutzerebenendaten unterstützen und durch den Vorwärtskanal zum Übertragen von Signalisierung unterstützt werden, und
Multiplexen (203, 308) von Benutzerebenendaten zum Ausbilden von Verkehrsrahmen gemäß der Kategorie für Benutzerebenendaten und Übertragen der Benutzerebenendaten enthaltenden Verkehrsrahmen durch den Vorwärtskanal zum Übertragen von Benutzerebenendaten an eine Mobilstation eines empfangenden Endes.

19. System nach Anspruch 18, umfassend eine Mobilstation MS, Übertragen auf dem Rückkanal an den BSC, Empfangen von Signalisierung von dem BSC auf dem Vorwärtskanal zum Übertragen von Signalisierung und Empfangen von Benutzerebenendaten in Vorwärtsrichtung von dem BSC auf dem Vorwärtskanal zum Übertragen von Benutzerebenendaten, wobei die MS Verarbeitungsmittel umfasst, die konfiguriert sind zum:
Wählen (206, 311) einer Kategorie zur Signalisierung aus mehreren Kategorien, die Signalisierungsübertragung unterstützen und durch den Vorwärtskanal zum Übertragen von Signalisierung unterstützt werden;
Demultiplexen (206, 311) der die Signalisierung enthaltenden Verkehrsrahmen auf der Basis der Kategorie zur Signalisierung und zum Erkennen der Signalisierung;
Wählen (206, 311) einer Kategorie für Benutzerebenendaten aus Kategorien, die Benutzerebenendaten unterstützen und durch den Vorwärtskanal zum Übertragen von Signalisierung unterstützt werden; und
Demultiplexen (206, 311) der die Benutzerebenendaten enthaltenden Verkehrsrahmen auf der Basis der Kategorie für Benutzerebenendaten und Erkennen der Benutzerebenendaten.

20. System nach Anspruch 19, wobei das Demultiplexen der Verkehrsrahmen Folgendes umfasst:
Demultiplexen der Verkehrsrahmen, falls die Signalisierung und/oder die Benutzerebenendaten die Daten des Bündelungsdienstes (202, 205, 301, 304, 307, 310) sind.

21. System nach Anspruch 20, wobei der Verkehrsrahmen eine Multiplexprotokolldateneinheit MuxPDU umfasst; das Demultiplexen der Verkehrsrahmen in einer Multiplexteilschicht Mux einer MAC-Schicht der MS implementiert wird und das Multiplexen der Verkehrsrahmen in der Mux-Teilschicht der MAC-Schicht des BSC implementiert wird.

22. System nach Anspruch 18, wobei die Benutzerebenendaten von Verkehrsrahmen gemäß der Kategorie zur Signalisierung Sprachdienstdaten sind und die Benutzerebenendaten von Verkehrsrahmen gemäß der Kategorie für Benutzerebenendaten entweder Sprachdienstdaten oder Datendienstdaten sind.

23. System nach Anspruch 18, wobei das System einen Bündelungsdienst bereitstellt.

24. System nach Anspruch 23, wobei das System die Verarbeitung für den Bündelungsdienst (202, 205, 301, 304, 307, 310) anwendet.

25. System nach Anspruch 23 oder 24, wobei gemäß einer lokal gespeicherten Dienstoption SO bestimmt wird, ob der vorliegende Dienst ein Bündelungsdienst ist.

26. System nach Anspruch 18, wobei das Multiplexen der Signalisierung zum Ausbilden der Verkehrsrahmen gemäß der Kategorie zur Signalisierung das Füllen von Feldern in den Verkehrsrahmen, die mit Benutzerebenendaten gefüllt sein sollten, mit ungültigen Daten für den Fall umfasst, dass die gewählte Kategorie zur Signalisierung das Multiplexen von Signalisierung und Benutzerebenendaten unterstützt.

27. System nach Anspruch 18 oder 26, wobei, wenn die die Signalisierung enthaltenden Verkehrsrahmen gedemultiplext und die Signalisierung erkannt werden, falls die Kategorie zur Signalisierung, die für das Demultiplexen verwendet wird, das Multiplexen von Signalisierung und den Benutzerebenendaten unterstützt, die Felder in den Verkehrsrahmen, die mit den Benutzerebenendaten gefüllt sein sollten, ignoriert werden.

28. System nach Anspruch 21, wobei der Vorwärtskanal zum Übertragen von Signalisierung ein Dedicated Control Channel DCCH ist, der Rückkanal ein DCCH ist, der Kanal zum Übertragen von Benutzerebenendaten ein Supplementary Channel SCH ist, ein Typ des MuxPDU ein MuxPDU Typ 1 ist und die mehreren Kategorien Kategorien von MuxPDU Typ 1 sind;
wobei die mehreren Kategorien, die die Signalisierungsübertragung unterstützen und durch den Vorwärtskanal zum Übertragen von Signalisierung unterstützt werden, Kategorien 2 bis 5 umfassen; und
die mehreren Kategorien, die die Benutzerebenendatenübertragung unterstützen und durch den Vorwärtskanal zum Übertragen von Signalisierung unterstützt werden, Kategorien 1 und 6 bis 9 umfassen.

29. System nach Anspruch 21, wobei der Vorwärtskanal zum Übertragen von Signalisierung ein Fundamental Channel FCH ist, der Rückkanal ein FCH ist, der Vorwärtskanal zum Übertragen von Benutzerebenendaten ein SCH ist, ein Typ des MuxPDU ein MuxPDU Typ 1 ist und die mehreren Kategorien Kategorien von MuxPDU Typ 1 sind;
wobei die mehreren Kategorien, die die Signalisierungsübertragung unterstützen und durch den Vorwärtskanal zum Übertragen von Signalisierung unterstützt werden, Kategorien 2 bis 5 umfassen; und
die mehreren Kategorien, die die Benutzerebenendatenübertragung unterstützen und durch den Vorwärtskanal zum Übertragen von Signalisierung unterstützt werden, Kategorien 1 und 6 bis 12 umfassen.

30. System nach Anspruch 21, wobei der Vorwärtskanal zum Übertragen von Signalisierung ein DCCH ist, der Rückkanal ein DCCH ist, der Vorwärtskanal zum Übertragen von Benutzerebenendaten ein SCH ist, ein Typ des MuxPDU ein MuxPDU Typ 2 ist und die mehreren Kategorien Kategorien von MuxPDU Typ 2 sind;
wobei die mehreren Kategorien, die die Signalisierungsübertragung unterstützen und durch den Vorwärtskanal zum Übertragen von Signalisierung unterstützt werden, Kategorien 2 bis 5 umfassen; und
die mehreren Kategorien, die die Benutzerebenendatenübertragung unterstützen und durch den Vorwärtskanal zum Übertragen von Signalisierung unterstützt werden, Kategorien 1 und 6 bis 9 umfassen.

31. System nach Anspruch 21, wobei der Vorwärtskanal zum Übertragen von Signalisierung ein Fundamental Channel FCH ist, der Rückkanal ein FCH ist, der Vorwärtskanal zum Übertragen von Benutzerebenendaten ein SCH ist, ein Typ des MuxPDU ein MuxPDU Typ 1 ist und die mehreren Kategorien Kategorien von MuxPDU Typ 1 sind;
wobei die mehreren Kategorien, die die Signalisierungsübertragung unterstützen und durch den Vorwärtskanal zum Übertragen von Signalisierung unterstützt werden, Kategorien 2 bis 5, 10, 12 bis 14, 18 und 20 bis 21 umfassen; und
die mehreren Kategorien, die die Benutzerebenendatenübertragung unterstützen und durch den Vorwärtskanal zum Übertragen von Signalisierung unterstützt werden, Kategorien 1, 6 bis 9, 11, 15 bis 17, 19 und 22 bis 25 umfassen.

32. System nach Anspruch 18, umfassend eine Mobilstation MS, Übertragen auf dem Rückkanal an den BSC, Empfangen von Signalisierung von dem BSC auf dem Vorwärtskanal zum Übertragen von Signalisierung und Empfangen von Benutzerebenendaten in Vorwärtsrichtung in dem Vorwärtskanal zum Übertragen von Benutzerebenendaten, wobei die MS Verarbeitungsmittel umfasst, die konfiguriert sind zum
Multiplexen (302) der Benutzerebenendaten zum Ausbilden von Verkehrsrahmen gemäß der Kategorie für Benutzerebenendaten und
Übertragen der die Benutzerebenendaten enthaltenden Verkehrsrahmen durch den Rückkanal.

33. System nach Anspruch 32, wobei die MS Verarbeitungsmittel umfasst, die konfiguriert sind zum:
Wählen (302) der Kategorie zur Signalisierung unter den mehreren Kategorien, die Signalisierungsübertragung unterstützen, und Multiplexen der Signalisierung zum Ausbilden von die Signalisierung enthaltenden Verkehrsrahmen gemäß der Kategorie zur Signalisierung, und
Wählen (302) einer Kategorie für Benutzerebenendaten unter den mehreren Kategorien, die die Benutzerebenendatenübertragung zumindest unterstützen.

34. System nach Anspruch 18, wobei das System mindestens zwei BSCs umfasst, wobei ein erster BSC (103) ausgelegt ist zum Übertragen (302) der Signalisierung auf dem Vorwärtskanal zum Übertragen von Signalisierung und der Benutzerebenendaten auf dem Vorwärtskanal zum Übertragen von Benutzerebenendaten an eine MS eines empfangenden Endes, und ein zweiter BSC (102) ausgelegt ist zum Empfangen (201, 306) der Signalisierung und der Benutzerebenendaten auf dem Rückkanal von einer MS eines übertragenden Endes, wobei die Signalisierung oder die Benutzerebenendaten an den ersten BSC übertragen werden sollen.

35. Mobilstation MS, die ausgelegt ist zum:
Empfangen einer Signalisierung von einem BSC in Vorwärtsrichtung auf einem Vorwärtskanal zum Übertragen einer von dem BSC eines empfangenden Endes multiplexten Signalisierung zum Ausbilden von Verkehrsrahmen gemäß einer Kategorie zur Signalisierung, gewählt von dem BSC, aus mehreren Kategorien, die Signalisierungsübertragung unterstützen und durch den Vorwärtskanal zum Übertragen von Signalisierung unterstützt werden, und Empfangen von Benutzerebenendaten von dem BSC in Vorwärtsrichtung auf einem Vorwärtskanal zum Übertragen von von dem BSC gemultiplexten Benutzerebenendaten zum Ausbilden von Verkehrsrahmen gemäß einer Kategorie für Benutzerebenendaten, ausgewählt von dem BSC, aus mehreren Kategorien, die Benutzerebenendatenübertragung unterstützen und durch den Vorwärtskanal zum Übertragen von Signalisierung unterstützt werden;
Demultiplexen (206, 311) der die Signalisierung enthaltenden Verkehrsrahmen auf der Basis der Kategorie zur Signalisierung unter mehreren Kategorien, die Signalisierungsübertragung unterstützen und durch den Vorwärtskanal zum Übertragen von Signalisierung unterstützt werden, und Erkennen der Signalisierung und Demultiplexen (206, 311) der die Benutzerebenendaten enthaltenden Verkehrsrahmen auf der Basis der Kategorie für Benutzerebenendaten aus Kategorien, die Benutzerebenendaten unterstützen und durch den Vorwärtskanal zum Übertragen von Signalisierung unterstützt werden, und Erkennen der Benutzerebenendaten.

## Revendications

1. Procédé de transmission de données de plan utilisateur dans un système radio à ressources partagées numérique, dans lequel une signalisation et des données de plan utilisateur dans un sens retour sont transmises sur un canal retour, une signalisation dans le sens aller est transmise sur un canal aller de transmission de signalisation, et des données de plan utilisateur dans le sens aller sont transmises sur un canal aller de transmission de données de plan utilisateur, comprenant :
la réception, par un Contrôleur de Station de Base, BSC, d'une signalisation et/ou de données de plan utilisateur ;
et **caractérisé en ce qu'**il comprend :
la sélection (203, 308), par le BSC, d'une catégorie de signalisation parmi une pluralité de catégories qui supportent la transmission de signalisation et sont supportées par le canal aller de transmission de signalisation ;
le multiplexage (203, 308), par le BSC, de la signalisation pour former des trames de trafic en fonction de la catégorie de signalisation et la transmission des trames de trafic contenant la signalisation par le biais du canal aller de transmission de signalisation à une station mobile à une extrémité destinataire ;
la sélection (203, 308), par le BSC, d'une catégorie de données de plan utilisateur parmi une pluralité de catégories qui supportent les données de plan utilisateur et sont supportées par le canal aller de transmission de signalisation ; et
le multiplexage (203, 308), par le BSC, des données de plan utilisateur pour former des trames de trafic en fonction de la catégorie de données de plan utilisateur et la transmission des trames de trafic contenant les données de plan utilisateur par le biais du canal aller de transmission de données de plan utilisateur à une station mobile à une extrémité destinataire.

2. Procédé selon la revendication 1, comprenant en outre :
la réception (204, 309), par une Station Mobile, MS, à une extrémité destinataire, des trames de trafic contenant la signalisation par le biais du canal aller de transmission de signalisation,
le démultiplexage (206, 311), par la MS, des trames de trafic contenant la signalisation en fonction de la catégorie de signalisation et la reconnaissance de la signalisation ;
la réception (204, 309), par la MS, des trames de trafic contenant les données de plan utilisateur par le biais du canal aller de transmission de données de plan utilisateur, et
le démultiplexage (206, 311), par la MS, des trames de trafic contenant les données de plan utilisateur en fonction de la catégorie de données de plan utilisateur et la reconnaissance des données de plan utilisateur.

3. Procédé selon la revendication 2, dans lequel le démultiplexage des trames de trafic comprend :
le démultiplexage des trames de trafic si la signalisation et/ou les données de plan utilisateur sont les données du service radio à ressources partagées (202, 205, 301,304,307,310).

4. Procédé selon la revendication 1, dans lequel la trame de trafic comprend une unité de données de protocole de sous-couche de multiplexage, MuxPDU, le démultiplexage des trames de trafic est mis en oeuvre dans une sous-couche de multiplexage, Mux, d'une couche de Commande d'Accès au Support, MAC, de la MS et le multiplexage des trames de trafic est mis en oeuvre dans la sous-couche Mux de la couche MAC du BSC.

5. Procédé selon la revendication 1, dans lequel les données de plan utilisateur des trames de trafic en fonction de la catégorie de signalisation sont des données de service vocal, et les données de plan utilisateur des trames de trafic en fonction de la catégorie de données de plan utilisateur sont soit des données de service vocal, soit des données de service de données.

6. Procédé selon la revendication 1, le procédé étant un procédé de service radio à ressources partagées.

7. Procédé selon la revendication 6, le procédé étant appliqué pour le service radio à ressources partagées (202, 205, 301, 304, 307, 310).

8. Procédé selon la revendication 6 ou 7, dans lequel la détermination du présent service comme un service radio à ressources partagées est effectuée en fonction d'une Option de Service, SO, sauvegardée localement.

9. Procédé selon la revendication 1, dans lequel ledit multiplexage de la signalisation pour former des trames de trafic en fonction de la catégorie de signalisation comprend le remplissage de champs dans les trames de trafic, lesquels devraient être remplis avec des données de plan utilisateur, avec des données non valables si la catégorie sélectionnée de signalisation supporte le multiplexage de la signalisation et des données de plan utilisateur.

10. Procédé selon la revendication 1 ou 9, dans lequel lors du démultiplexage des trames de trafic contenant la signalisation et de la reconnaissance de la signalisation, si la catégorie de signalisation utilisée pour le démultiplexage supporte le multiplexage de la signalisation et des données de plan utilisateur, les champs dans les trames de trafic qui devraient être remplis avec les données de plan utilisateur sont ignorés.

11. Procédé selon la revendication 4, dans lequel le canal aller de transmission de signalisation est un Canal de Commande Dédié, DCCH, le canal retour est un DCCH, le canal aller de transmission de données de plan utilisateur est un Canal Supplémentaire, SCH, un type du MuxPDU est un Type 1 de MuxPDU, et la pluralité de catégories est constituée de catégories de Type 1 de MuxPDU ;
la pluralité de catégories qui supportent la transmission de signalisation et sont supportées par le canal aller de transmission de signalisation comprend les catégories 2 à 5 ; et
la pluralité de catégories qui supportent la transmission de données de plan utilisateur et sont supportées par le canal aller de transmission de signalisation comprend les catégories 1 et 6 à 9.

12. Procédé selon la revendication 4, dans lequel le canal aller de transmission de signalisation est un Canal Fondamental, FCH, le canal retour est un FCH, le canal aller de transmission de données de plan utilisateur est un SCH, un type du MuxPDU est un Type 1 de MuxPDU, et la pluralité de catégories est constituée de catégories de Type 1 de MuxPDU ;
la pluralité de catégories qui supportent la transmission de signalisation et sont supportées par le canal aller de transmission de signalisation comprend les catégories 2 à 5 ; et
la pluralité de catégories qui supportent la transmission de données de plan utilisateur et sont supportées par le canal aller de transmission de signalisation comprend les catégories 1 et 6 à 12.

13. Procédé selon la revendication 4, dans lequel le canal aller de transmission de signalisation est un DCCH, le canal retour est un DCCH, le canal aller de transmission de données de plan utilisateur est un SCH, un type du MuxPDU est un Type 2 de MuxPDU, et la pluralité de catégories est constituée de catégories de Type 2 de MuxPDU ;
la pluralité de catégories qui supportent la transmission de signalisation et sont supportées par le canal aller de transmission de signalisation comprend les catégories 2 à 5 ; et
la pluralité de catégories qui supportent la transmission de données de plan utilisateur et sont supportées par le canal aller de transmission de signalisation comprend les catégories 1 et 6 à 9.

14. Procédé selon la revendication 4, dans lequel le canal aller de transmission de signalisation est un FCH, le canal retour est un FCH, le canal aller de transmission de données de plan utilisateur est un SCH, un type du MuxPDU est un Type 2 de MuxPDU, et la pluralité de catégories est constituée de catégories de Type 2 de MuxPDU ;
la pluralité de catégories qui supportent la transmission de signalisation et sont supportées par le canal aller de transmission de signalisation comprend les catégories 2 à 5, 10, 12 à 14, 18 et 20 et 21 ; et
la pluralité de catégories qui supportent la transmission de données de plan utilisateur et sont supportées par le canal aller de transmission de signalisation comprend les catégories 1, 6 et 9, 11, 15 à 17, 19 et 22 à 25.

15. Procédé selon la revendication 1, comprenant
le multiplexage (302) par une station mobile, MS, des données de plan utilisateur pour former des trames de trafic en fonction de la catégorie de données de plan utilisateur et
la transmission des trames de trafic contenant les données de plan utilisateur par le biais du canal retour.

16. Procédé selon la revendication 15, comprenant :
la sélection (302), par la MS, d'une catégorie de signalisation parmi la pluralité de catégories qui supportent la transmission de signalisation et le multiplexage de la signalisation pour former des trames de trafic contenant la signalisation en fonction de la catégorie de signalisation, et
la sélection (302), par la MS, d'une catégorie de données de plan utilisateur parmi la pluralité de catégories qui supportent au moins la transmission de données de plan utilisateur.

17. Procédé selon la revendication 1, dans lequel le canal retour est reçu dans un premier BSC (102, 303) qui couvre une MS à une extrémité expéditrice, le canal aller de transmission de signalisation est transmis depuis un second BSC (103) qui couvre la MS à l'extrémité réceptrice, et le canal aller de transmission de données de plan utilisateur est transmis depuis le second BSC (103).

18. Système comprenant un contrôleur de station de base, BSC, pour la transmission de données de plan utilisateur dans un système radio à ressources partagées numérique, dans lequel une signalisation et des données de plan utilisateur dans un sens retour sont transmises sur un canal retour, une signalisation dans le sens aller est transmise sur un canal aller de transmission de signalisation, et des données de plan utilisateur dans le sens aller sont transmises sur un canal aller de transmission de données de plan utilisateur,
**caractérisé en ce que** le BSC comprend des moyens de traitement configurés pour
sélectionner (203, 308) une catégorie de signalisation parmi une pluralité de catégories qui supportent la transmission de signalisation et sont supportées par le canal aller de transmission de signalisation ;
multiplexer (203, 308) la signalisation pour former des trames de trafic en fonction de la catégorie de signalisation et transmettre les trames de trafic contenant la signalisation par le biais du canal aller de transmission de signalisation à une station mobile à une extrémité destinataire ;
sélectionner (203, 308) une catégorie de données de plan utilisateur parmi une pluralité de catégories qui supportent la transmission de données de plan utilisateur et sont supportées par le canal aller de transmission de signalisation ; et
multiplexer (203, 308) les données de plan utilisateur pour former des trames de trafic en fonction de la catégorie de données de plan utilisateur et transmettre les trames de trafic contenant les données de plan utilisateur par le biais du canal aller de transmission de données de plan utilisateur à une station mobile à une extrémité destinataire.

19. Système selon la revendication 18, comprenant une station mobile, MS, qui transmet sur le canal retour vers le BSC, reçoit une signalisation depuis le BSC sur le canal aller de transmission de signalisation, et reçoit des données de plan utilisateur dans un sens aller depuis le BSC sur le canal aller de transmission de données de plan utilisateur, la MS comprenant des moyens de traitement configurés pour :
sélectionner (206, 311) une catégorie de signalisation parmi une pluralité de catégories qui supportent la transmission de signalisation et sont supportées par le canal aller de transmission de signalisation ;
démultiplexer (206, 311) les trames de trafic contenant la signalisation en fonction de la catégorie de signalisation et reconnaître la signalisation ;
sélectionner (206, 311) une catégorie de données de plan utilisateur parmi des catégories qui supportent les données de plan utilisateur et sont supportées par le canal aller de transmission de signalisation ; et
démultiplexer (206, 311) les trames de trafic contenant les données de plan utilisateur en fonction de la catégorie de données de plan utilisateur et reconnaître les données de plan utilisateur.

20. Système selon la revendication 19, dans lequel le démultiplexage des trames de trafic comprend :
le démultiplexage des trames de trafic si la signalisation et/ou les données de plan utilisateur sont les données du service radio à ressources partagées numérique (202,205,301,304,307,310).

21. Système selon la revendication 20, dans lequel la trame de trafic comprend une unité de données de protocole de multiplexage, MuxPDU, le démultiplexage des trames de trafic est mis en oeuvre dans une sous-couche de multiplexage, Mux, d'une couche de Commande d'Accès au Support, MAC, de la MS et le multiplexage des trames de trafic est mis en oeuvre dans la sous-couche Mux de la couche MAC du BSC.

22. Système selon la revendication 18, dans lequel les données de plan utilisateur des trames de trafic en fonction de la catégorie de signalisation sont des données de service vocal, et les données de plan utilisateur des trames de trafic en fonction de la catégorie de données de plan utilisateur sont soit des données de service vocal, soit des données de service de données.

23. Système selon la revendication 18, le système fournissant un service radio à ressources partagées.

24. Système selon la revendication 23, le système appliquant le traitement du service radio à ressources partagées (202, 205, 301, 304, 307, 310).

25. Système selon la revendication 23 ou 24, dans lequel la détermination du présent service comme un service radio à ressources partagées est effectuée en fonction d'une Option de Service, SO, sauvegardée localement.

26. Système selon la revendication 18, dans lequel ledit multiplexage de la signalisation pour former les trames de trafic en fonction de la catégorie de signalisation comprend le remplissage de champs dans les trames de trafic, lesquels devraient être remplis avec des données de plan utilisateur, avec des données non valables si la catégorie sélectionnée de signalisation supporte le multiplexage de la signalisation et des données de plan utilisateur.

27. Système selon la revendication 18 ou 26, dans lequel lors du démultiplexage des trames de trafic contenant la signalisation et de la reconnaissance de la signalisation, si la catégorie de signalisation utilisée pour le démultiplexage supporte le multiplexage de la signalisation et des données de plan utilisateur, les champs dans les trames de trafic qui devraient être remplis avec les données de plan utilisateur sont ignorés.

28. Système selon la revendication 21, dans lequel le canal aller de transmission de signalisation est un Canal de Commande Dédié, DCCH, le canal retour est un DCCH, le canal de transmission de données de plan utilisateur est un Canal Supplémentaire, SCH, un type du MuxPDU est un Type 1 de MuxPDU, et la pluralité de catégories est constituée de catégories de Type 1 de MuxPDU ;
la pluralité de catégories qui supportent la transmission de signalisation et sont supportées par le canal aller de transmission de signalisation comprend les catégories 2 à 5 ; et
la pluralité de catégories qui supportent la transmission de données de plan utilisateur et sont supportées par le canal aller de transmission de signalisation comprend les catégories 1 et 6 à 9.

29. Système selon la revendication 21, dans lequel le canal aller de transmission de signalisation est un Canal Fondamental, FCH, le canal retour est un FCH, le canal aller de transmission de données de plan utilisateur est un SCH, un type du MuxPDU est un Type 1 de MuxPDU, et la pluralité de catégories est constituée de catégories de Type 1 de MuxPDU ;
la pluralité de catégories qui supportent la transmission de signalisation et sont supportées par le canal aller de transmission de signalisation comprend les catégories 2 à 5 ; et
la pluralité de catégories qui supportent la transmission de données de plan utilisateur et sont supportées par le canal aller de transmission de signalisation comprend les catégories 1 et 6 à 12.

30. Système selon la revendication 21, dans lequel le canal aller de transmission de signalisation est un DCCH, le canal retour est un DCCH, le canal aller de transmission de données de plan utilisateur est un SCH, un type du MuxPDU est un Type 2 de MuxPDU, et la pluralité de catégories est constituée de catégories de Type 2 de MuxPDU ;
la pluralité de catégories qui supportent la transmission de signalisation et sont supportées par le canal aller de transmission de signalisation comprend les catégories 2 à 5 ; et
la pluralité de catégories qui supportent la transmission de données de plan utilisateur et sont supportées par le canal aller de transmission de signalisation comprend les catégories 1 et 6 à 9.

31. Système selon la revendication 21, dans lequel le canal aller de transmission de signalisation est un Canal Fondamental, FCH, le canal retour est un FCH, le canal aller de transmission de données de plan utilisateur est un SCH, un type du MuxPDU est un Type 1 de MuxPDU, et la pluralité de catégories est constituée de catégories de Type 1 de MuxPDU ;
la pluralité de catégories qui supportent la transmission de signalisation et sont supportées par le canal aller de transmission de signalisation comprend les catégories 2 à 5, 10, 12 à 14, 18 et 20 et 21 ; et
la pluralité de catégories qui supportent la transmission de données de plan utilisateur et sont supportées par le canal aller de transmission de signalisation comprend les catégories 1, 6 à 9, 11, 15 à 17, 19 et 22 à 25.

32. Système selon la revendication 18, comprenant une station mobile, MS, qui transmet sur le canal retour vers le BSC, reçoit une signalisation depuis le BSC sur le canal aller de transmission de signalisation, et reçoit des données de plan utilisateur dans un sens aller sur le canal aller de transmission de données de plan utilisateur, la MS comprenant des moyens de traitement configurés pour
multiplexer (302) les données de plan utilisateur pour former des trames de trafic en fonction de la catégorie de données de plan utilisateur et
transmettre les trames de trafic contenant les données de plan utilisateur par le biais du canal retour.

33. Système selon la revendication 32, dans lequel la MS comprend des moyens de traitement configurés pour :
sélectionner (302) la catégorie de signalisation parmi la pluralité de catégories qui supportent la transmission de signalisation et multiplexer la signalisation pour former des trames de trafic contenant la signalisation en fonction de la catégorie de signalisation, et
sélectionner (302) une catégorie de données de plan utilisateur parmi la pluralité de catégories qui supportent au moins la transmission de données de plan utilisateur.

34. Système selon la revendication 18, dans lequel le système comprend au moins deux BSC, un premier BSC (103) étant agencé pour transmettre (302) la signalisation sur le canal aller de transmission de signalisation et les données de plan utilisateur sur le canal aller de transmission de données de plan utilisateur à une MS à une extrémité destinataire, et un second BSC (102) étant agencé pour recevoir (201, 306) la signalisation et les données de plan utilisateur sur le canal retour depuis une MS à une extrémité expéditrice, la signalisation ou les données de plan utilisateur devant être transmises au premier BSC.

35. Station mobile, MS, à une extrémité destinataire, adaptée pour :
recevoir depuis un BSC une signalisation dans le sens aller sur un canal aller de transmission de signalisation multiplexé par le BSC pour former des trames de trafic en fonction d'une catégorie de signalisation sélectionnée par le BSC parmi une pluralité de catégories qui supportent la transmission de signalisation et sont supportées par le canal aller de transmission de signalisation et recevoir depuis le BSC des données de plan utilisateur dans le sens aller sur un canal aller de transmission de données de plan utilisateur multiplexé par le BSC pour former des trames de trafic en fonction d'une catégorie de données de plan utilisateur sélectionnée par le BSC parmi une pluralité de catégories qui supportent la transmission de données de plan utilisateur et sont supportées par le canal aller de transmission de signalisation ;
démultiplexer (206, 311) les trames de trafic contenant la signalisation en fonction de la catégorie de signalisation parmi une pluralité de catégories qui supportent la transmission de signalisation et sont supportées par le canal aller de transmission de signalisation, et reconnaître la signalisation ; et
démultiplexer (206, 311) les trames de trafic contenant les données de plan utilisateur en fonction de la catégorie de données de plan utilisateur parmi les catégories qui supportent les données de plan utilisateur et sont supportées par le canal aller de transmission de signalisation, et reconnaître les données de plan utilisateur.
